(19) **Europäisches Patentamt / European Patent Office / Office européen des brevets**

(11) **EP 3 343 201 B1**

(12) **FASCICULE DE BREVET EUROPEEN**

(45) Date de publication et mention
de la délivrance du brevet:
**09.08.2023 Bulletin 2023/32**

(21) Numéro de dépôt: **17210133.9**

(22) Date de dépôt: **22.12.2017**

(51) Classification Internationale des Brevets (IPC):
**G01N 15/14** *(2006.01)*   **G01N 15/10** *(2006.01)*
**G03H 1/00** *(2006.01)*   **G03H 1/04** *(2006.01)*

(52) Classification Coopérative des Brevets (CPC):
**G03H 1/0443; G01N 15/1434; G01N 15/1459;**
G01N 2015/1006; G01N 2015/1454;
G01N 2015/1486; G03H 2001/0033;
G03H 2001/0447; G03H 2210/62

(54) **PROCÉDÉ ET DISPOSITIF DE COMPTAGE ET DE CARACTÉRISATION DE PARTICULES DANS UN FLUIDE EN MOUVEMENT**

ZÄHL- UND CHARAKTERISIERUNGSVERFAHREN VON TEILCHEN IN EINEM FLUID IN BEWEGUNG, UND GERÄT

METHOD AND DEVICE FOR COUNTING AND CHARACTERISING PARTICLES IN A MOVING FLUID

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2016 FR 1663475**

(43) Date de publication de la demande:
**04.07.2018 Bulletin 2018/27**

(73) Titulaire: **COMMISSARIAT À L'ÉNERGIE ATOMIQUE ET AUX ÉNERGIES ALTERNATIVES
75015 Paris (FR)**

(72) Inventeurs:
• **JOLY, Pierre
38100 GRENOBLE (FR)**
• **ROUSIER, Rodrigue
27230 BOURNAINVILLE (FR)**

• **ELVIRA, David
91430 Igny (FR)**

(74) Mandataire: **INNOV-GROUP
310, avenue Berthelot
69372 Lyon Cedex 08 (FR)**

(56) Documents cités:
**WO-A1-2008/090330   FR-A1- 3 031 180**

• **PASQUALE MEMMOLO ET AL: "Twin-beams digital holography for 3D tracking and quantitative phase-contrast microscopy in microfluidics", OPTICS EXPRESS, vol. 19, no. 25, 5 décembre 2011 (2011-12-05), page 25833, XP055145579, ISSN: 1094-4087, DOI: 10.1364/OE.19.025833**

**Description**

**DOMAINE TECHNIQUE**

Le domaine technique de l'invention est le comptage de particules circulant dans une chambre fluidique à l'aide d'une méthode optique.

**ART ANTERIEUR**

Plusieurs procédés optiques ont déjà été mis en oeuvre pour compter des particules circulant dans un fluide, le fluide étant un gaz ou un liquide. Un principe très répandu est basé sur l'illumination, à l'aide d'un faisceau lumineux d'un fluide dans lequel des particules circulent. Lorsqu'une particule traverse le faisceau, une partie de la lumière est diffusée et peut être détectée par un photodétecteur. Ce principe a été mis en oeuvre pour la détection de particules dans l'air, ou pour la détection de cellules dans des liquides, par exemple des liquides biologiques.

D'autres procédés reposent sur l'analyse d'images, par exemple à l'aide d'un microscope, mais les images ne fournissent qu'une information bidimensionnelle quant à la position des particules.

Le document WO2008090330 décrit un dispositif permettant l'observation d'échantillons comportant des cellules par imagerie sans lentille. L'échantillon est disposé entre une source de lumière et un capteur d'image, sans disposer un système optique de formation d'image entre l'échantillon et le capteur d'image. Ainsi, le capteur d'image collecte une image, également appelée hologramme, formée de figures d'interférence entre l'onde lumineuse émise par la source de lumière et transmise par l'échantillon, et des ondes de diffraction, résultant de la diffraction par l'échantillon de l'onde lumineuse émise par la source de lumière. Ces figures d'interférences sont généralement formées par une succession d'anneaux concentriques. Elles sont parfois dénommées figures de diffraction, ou désignées par le terme anglais « diffraction pattern ». On acquiert ainsi des images, dont le champ d'observation est nettement plus important que celui d'un microscope. Lorsque la concentration en cellules de l'échantillon est suffisamment faible, à chaque cellule peut être associée une figure d'interférence ; leur dénombrement permet la numération des cellules présentes dans l'échantillon. Mais l'hologramme ne permet pas un comptage fiable des cellules lorsque la concentration augmente, et/ou lorsque les particules sont en mouvement. Le procédé montre également des limites lorsque l'hologramme présente un faible rapport sur bruit, par exemple lorsque la taille d'une particule est faible ou lorsqu'une particule présente un indice de réfraction proche de celui du milieu formant l'échantillon. Ce document décrit également une détermination d'une position tridimensionnelle de particules en combinant différents hologrammes. Ce document décrit également une application de l'imagerie sans lentille au suivi du mouvement, ou "tracking" de particules, en particulier dans une application de chimiotaxie, les particules étant mobiles par rapport à un milieu dans lequel elles sont plongées.

La demande de brevet FR3031180 décrit une détermination d'une position tridimensionnelle de particules, par application d'un algorithme de focalisation numérique, à une image obtenue par imagerie défocalisée.

La demande de brevet US2012/148141 décrit un procédé reprenant les principes de WO2008090330, en implémentant un algorithme de reconstruction holographique à une succession d'images acquises pour reconstruire des images complexes de spermatozoïdes. L'objectif est de caractériser leur motilité. Il s'agit d'un procédé basé sur un suivi individuel de trajectoires de particules mobiles, dans un fluide immobile, sur la base de coordonnées tridimensionnelles des particules, obtenues par la reconstruction holographique. En effet, une telle reconstruction permet d'apporter une estimation d'une distance entre un capteur d'image et une particule, permettant d'accéder à une information dite de profondeur, complétant l'information bidimensionnelle obtenue par les capteurs d'image classiques. Par ailleurs, le procédé permet de déterminer un modèle de déplacement de chaque particule, le modèle de déplacement étant un résultat obtenu par la mise en oeuvre du procédé.

Par ailleurs, de nombreux procédés d'imagerie d'écoulements, désignés par l'acronyme anglosaxon "Particle Imaging Velocimetry" mettent en oeuvre des procédés de détection optique de particules de façon à caractériser leur mouvement, qui est représentatif du mouvement du fluide étudié.

Les inventeurs de la présente invention ont proposé un procédé permettant une localisation et un comptage de particules circulant dans une chambre fluidique, pouvant être automatisé et mis en oeuvre dans un fluide en mouvement. Le procédé peut être mis en oeuvre automatiquement, et adresser des vitesses ou quantités de particules élevées. De plus, lorsque des particules de différents types sont présentes dans la chambre fluidique, le procédé peut permettre une discrimination entre différents types de particules, de façon à compter le nombre de particules de différents types, en se basant sur leurs déplacements respectifs.

**EXPOSE DE L'INVENTION**

Un objet de l'invention est un procédé de comptage de particules en mouvement dans un fluide, circulant dans une chambre fluidique, le procédé comportant les étapes suivantes :

a) disposition de la chambre fluidique entre une source de lumière et un capteur d'image, le capteur d'image s'étendant selon un plan de détection ;

b) illumination de la chambre fluidique par la source de lumière, la source de lumière émettant une onde lumineuse incidente se propageant selon un axe de propagation et acquisition, par le capteur d'image, d'une image, dite première image, représentative d'une onde lumineuse, dite onde d'exposition, à laquelle est exposé le capteur d'image, le capteur d'image comportant différents pixels, à chaque pixel étant associé une coordonnée radiale dans le plan de détection ;

c) à partir de l'image acquise, obtention de coordonnées, notamment tridimensionnelles, de particules, dans la chambre fluidique, à un premier instant,

d) obtention de coordonnées, notamment tridimensionnelles, de particules dans la chambre fluidique à un deuxième instant, postérieur au premier instant ;

e) à partir des coordonnées des particules obtenues au premier instant et au deuxième instant, détermination de déplacements potentiels des particules entre lesdits instants.

f) prise en compte d'un modèle de déplacement du fluide dans la chambre fluidique ;

g) à partir du modèle de déplacement du fluide considéré lors de l'étape f), validation de déplacements parmi les déplacements potentiels calculés lors de l'étape e) ;

h) à partir des déplacements validés lors de l'étape g), détermination d'un nombre de particules et/ou des coordonnées des particules au premier instant et/ou au deuxième instant.

L'étape c) peut comporter :

- l'obtention d'une première image d'intérêt à partir de la première image acquise lors de l'étape b), et l'application d'un opérateur de propagation numérique à première image d'intérêt, selon au moins une distance de reconstruction, le long de l'axe de propagation, de façon à obtenir au moins une image complexe reconstruite ;
- à partir de chaque image complexe reconstruite, l'obtention de coordonnées radiales de particules dans la chambre fluidique au premier instant.

Les particules occupant différentes coordonnées transversales selon l'axe de propagation, Z, l'étape c) peut comporter les sous-étapes suivantes :

ci) obtention d'une première image d'intérêt à partir de la première image acquise lors de l'étape b), et application d'un opérateur de propagation numérique à la première image d'intérêt, selon une pluralité de distances de reconstruction, selon l'axe de propagation, de façon à obtenir une première pile d'images complexes reconstruites, dite première pile d'images, comportant autant d'images complexes reconstruites que de distances de reconstruction, chaque image complexe reconstruite étant représentative d'une onde lumineuse d'exposition à laquelle est exposé le capteur d'image;

cii) pour au moins une coordonnée radiale définie par la première image d'intérêt, détermination d'une distance de reconstruction maximisant l'évolution d'une composante de chaque image complexe formant la première pile d'images, le long d'un axe parallèle à l'axe de propagation et passant par ladite coordonnée radiale, ladite distance de reconstruction déterminée formant une coordonnée transversale associée à ladite coordonnée radiale, la valeur de la composante calculée à ladite distance de reconstruction étant une valeur dite maximale associée à ladite coordonnée radiale, la sous-étape cii) étant réalisée pour tout ou partie de coordonnées radiales associées aux pixels de la première image d'intérêt;

ciii) établissement d'une liste de positions tridimensionnelles, chaque position tridimensionnelle comportant une coordonnée radiale et la coordonnée transversale associée, déterminée lors de la sous-étape cii), à chaque position tridimensionnelle étant associée la valeur maximale obtenue lors de la sous-étape cii) ;

civ) sélection de positions tridimensionnelles en fonction de la valeur maximale qui leur est associée.

La première image d'intérêt peut être :

- la première image acquise lors de l'étape b) ;
- ou la première image acquise lors de l'étape b), à laquelle est soustraite une image de la chambre fluidique, acquise par le capteur d'image, antérieurement ou postérieurement à l'acquisition de la première image, la soustraction étant pondérée par un terme de pondération, le terme de pondération pouvant être un réel compris entre 0 et 1 ;
- ou la première image acquise lors de l'étape b), à laquelle est soustraite une moyenne d'images acquises respectivement antérieurement et postérieurement à l'acquisition de la première image.

La composante considérée lors de la sous-étape cii) peut comporter la partie réelle, ou la partie imaginaire, ou le module, ou la phase de chaque image complexe formant la pile d'images.

La sous-étape civ) peut comporter :

- une formation d'une image, dite première image des maximas, dont chaque pixel est associé à une position tridimensionnelle déterminé lors de la sous-étape ciii), et est affecté de la valeur maximale déterminée, lors de la sous-étape ciii), pour ladite position tridimensionnelle ;
- une sélection, dans la première image des maximas, de pixels dont la valeur est maximale dans une zone de voisinage définie autour de chaque pixel ;
- un calcul, pour chaque pixel sélectionné, d'un rapport signal sur bruit en fonction de ladite valeur maximale et de la valeur de pixels de la première image des maximas situés dans une zone de calcul s'étendant autour dudit pixel ;

de telle sorte que chaque position tridimensionnelle est sélectionnée en fonction du rapport signal à bruit calculé pour le pixel de la première image des maximas qui lui est associé. L'étape de sélection de pixels est facultative, mais préférable, et le rapport signal sur bruit peut être calculé sur tous les pixels de l'image des maximas. Une position dont le pixel associé, sur la première image des maximas, n'est pas sélectionné, est invalidée.

Selon un mode de réalisation, l'étape d) peut comporter une acquisition, par le capteur d'image, d'une deuxième image, dont chaque pixel est associé à une coordonnée radiale dans le plan de détection ($P_0$). Selon ce mode de réalisation, l'étape d) comporte les sous-étapes suivantes :

di) obtention d'une deuxième image d'intérêt à partir de la deuxième image acquise et application d'un opérateur de propagation numérique à la deuxième image d'intérêt, selon une pluralité de distances de reconstruction, selon l'axe de propagation, de façon à obtenir une deuxième pile d'images complexes reconstruites, dite deuxième pile d'images, comportant autant d'images complexes reconstruites que de distances de reconstruction, chaque image complexe reconstruite étant représentative d'une onde lumineuse d'exposition à laquelle est exposé le capteur d'image au deuxième instant ;

dii) pour au moins une coordonnée radiale définie par la deuxième image d'intérêt, détermination d'une distance de reconstruction maximisant l'évolution d'une composante de chaque image complexe formant la deuxième pile d'images, le long d'un axe parallèle à l'axe de propagation et passant par ladite coordonnée radiale, ladite distance de reconstruction formant une coordonnée transversale associée à ladite coordonnée radiale, la valeur de la composante calculée à ladite distance de reconstruction étant une valeur dite maximale associée à ladite coordonnée radiale, la sous étape dii) étant réalisée pour tout ou partie de coordonnées radiales associées aux pixels de la deuxième image d'intérêt;

diii) établissement d'une liste de positions tridimensionnelles, chaque position tridimensionnelle comportant une coordonnée radiale et la coordonnée transversale associée, déterminée lors de la sous-étape dii), à chaque position tridimensionnelle étant associée la valeur maximale obtenue lors de la sous-étape dii) ;

div) sélection de positions tridimensionnelles en fonction de la valeur maximale qui leur est associée.

Lors de la sous-étape di), la deuxième image d'intérêt peut être :

- la deuxième image acquise ;
- ou la deuxième image acquise, à laquelle est soustraite une image de la chambre fluidique, acquise par le capteur d'image, antérieurement ou postérieurement à l'acquisition de la deuxième image, la soustraction étant pondérée par un terme de pondération ;
- ou la deuxième image acquise, à laquelle est soustraite une moyenne d'images acquises respectivement antérieurement et postérieurement à l'acquisition de la deuxième image.

Lors de la sous-étape dii), la composante peut comporter la partie réelle, ou la partie imaginaire, ou le module, ou la phase de chaque image complexe formant la pile d'images.

La sous-étape div) peut comporter:

- une formation d'une image, dite deuxième image des maximas, dont chaque pixel est associé à une position tridimensionnelle déterminé lors de la sous-étape diii), et est affecté de la valeur maximale déterminée, lors de la sous-étape diii), pour ladite position tridimensionnelle ;
- une sélection, dans la deuxième image des maximas, de pixels dont la valeur est maximale dans une zone de voisinage définie autour de chaque pixel ;
- un calcul, pour chaque pixel sélectionné, d'un rapport signal sur bruit en fonction de ladite valeur maximale et de la valeur de pixels de la deuxième image des maximas situés dans une zone de calcul s'étendant autour dudit pixel ;

de telle sorte que chaque position tridimensionnelle est sélectionnée en fonction du rapport signal à bruit calculé pour le pixel de la deuxième image des maximas qui lui est associé. L'étape de sélection est facultative, mais préférable, et le rapport signal sur bruit peut être calculé sur tous les pixels de l'image des maximas. Une position dont le pixel associé, sur la deuxième image des maximas, n'est pas sélectionné, est invalidée.

Selon un mode de réalisation :

- l'étape b) comporte deux illuminations successives de la chambre fluidique par la source de lumière, au premier instant et au deuxième instant, de telle sorte que la première image (*I*) représente l'onde d'exposition (14) à chacun des instants ;
- les étapes c) et d) sont confondues en une même étape d'obtention des coordonnées de particules au premier instant et au deuxième instant.

Le procédé peut comporter l'une des caractéristiques prises isolément ou selon les combinaisons techniquement réalisables :

- l'étape e) peut comporter une comparaison des coordonnées des particules dans la chambre fluidique déterminées au premier instant et au deuxième instant, de manière à établir une liste de déplacements potentiels des particules entre lesdits instants.
- l'étape g) comporte une détermination d'une plage de déplacements à l'aide du modèle de déplacement pris en compte lors de l'étape f), les déplacements potentiels étant validés lorsqu'ils sont compris dans ladite plage de déplacement.
- l'étape g) comporte une soustraction, à chaque déplacement potentiel, d'un déplacement selon le modèle de déplacement.

Selon un mode de réalisation, le fluide comporte des particules, chaque particule présentant et se déplaçant, par rapport au fluide, selon un modèle de déplacement, dit modèle de déplacement particulaire, dépendant de ladite propriété. Selon ce mode de réalisation, le procédé comporte, à partir de déplacements validés lors de l'étape g), une étape i) de prise en compte d'au moins un modèle de déplacement particulaire, de façon à compter les particules en fonction d'une valeur de ladite propriété. Selon une variante, le procédé comporte, à partir de déplacements potentiels déterminés lors de l'étape e), une étape e') de prise en compte d'au moins un modèle de déplacement particulaire, de façon à compter les particules en fonction d'une valeur de ladite propriété. La propriété est une masse ou une charge électrique, ou une aptitude à se déplacer dans le fluide.

Selon ce mode de réalisation, le procédé peut comporter :

- une prise en compte d'un modèle de déplacement particulaire pour une valeur prédéterminée de la propriété ;
- un calcul d'écarts des déplacements de chaque particule par rapport au modèle de déplacement particulaire ;

de telle sorte que la propriété de chaque particule est déterminée en fonction desdits écarts ainsi que de ladite valeur prédéterminée de la propriété.

Le fluide peut s'écouler selon une direction d'écoulement, et le déplacement particulaire peut s'effectuer selon une autre direction non parallèle à ladite direction d'écoulement.

Le procédé peut être tel qu'aucune optique de formation d'image n'est disposée entre le capteur d'image et la chambre fluidique. Il peut également être tel que le capteur d'image comporte une optique de formation d'image entre le capteur d'image et la chambre fluidique, l'image formée lors de l'étape b) étant une image défocalisée.

Un autre objet de l'invention est un dispositif pour de comptage de particules circulant dans une chambre fluidique, le dispositif comportant :

- une source de lumière configurée pour illuminer la chambre fluidique ;
- un capteur d'image s'étendant dans un plan de détection, la chambre fluidique étant interposée entre le capteur d'image et la source de lumière, le capteur d'image étant configuré pour acquérir une pluralité d'images de la chambre fluidique illuminée par la source de lumière, à un instant ou à des instants successifs ;
- le dispositif comportant un processeur apte à mettre en oeuvre les étapes c) à e) ou c) à h) d'un procédé tel que décrit dans cette demande, à partir d'au moins une image acquise par le capteur d'image.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

**FIGURES**

La figure 1A représente un exemple de dispositif permettant la mise en oeuvre de l'invention. La figure 1B est un détail de la figure 1A.

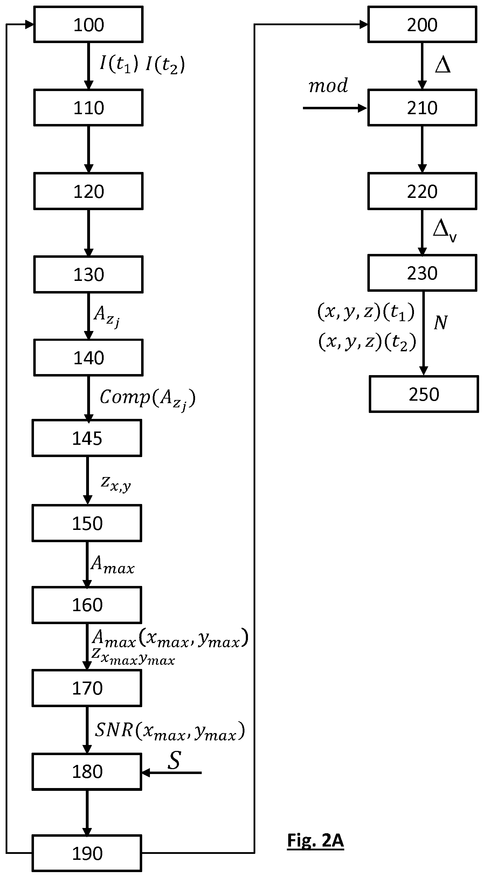

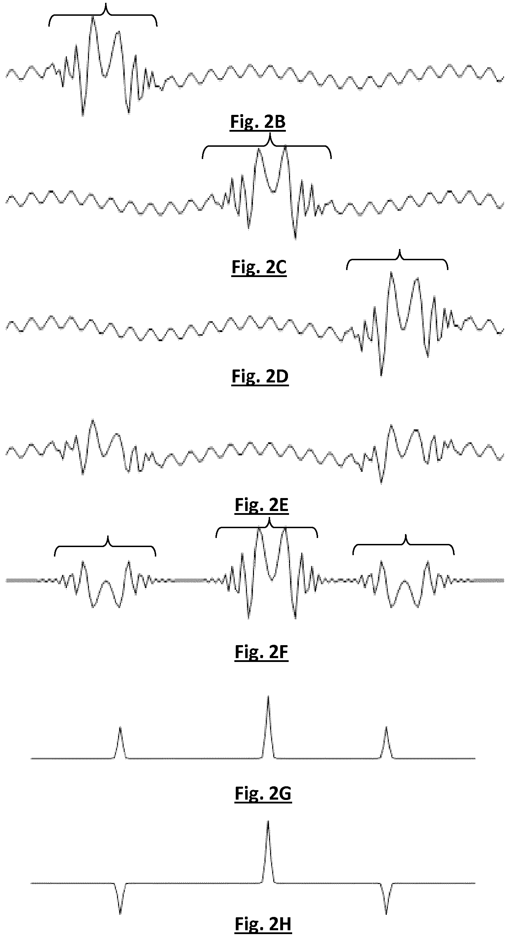

La figure 2A illustre une succession d'étapes permettant une mise en oeuvre d'un premier mode de réalisation du procédé. Les figures 2B, 2C et 2D montrent des profils d'une partie d'une image acquise s'étendant autour d'un hologramme correspondant à une particule, à trois instants successifs. La figure 2E montre un profil correspondant à une composante fixe, obtenus en combinant les profils des figures 2B à 2D. La figure 2F montre un profil correspondant à une composante mobile, ce profil étant obtenu par une soustraction de la composante fixe, représentée sur la figure 2D, au profil de la figure 2C. La figure 2G représente un profil modélisant l'évolution du module d'une image complexe reconstruite à partir d'une image correspondant au profil représenté sur la figure 2F. La figure 2H représente un profil modélisant l'évolution de l'opposé de la partie réelle d'une image complexe reconstruite à partir d'une image correspondant au profil représenté sur la figure 2F.

La figure 3A montre une chambre fluidique mise en oeuvre au cours d'un premier essai expérimental. La figure 3B est un tracé de résultats obtenus au cours du premier essai expérimental. La figure 3C montre l'impact d'une valeur d'un seuil sur les performances du comptage.

La figure 4A illustre une succession d'étapes permettant une mise en oeuvre d'un deuxième mode de réalisation du procédé. La figure 4B montre des résultats obtenus d'un deuxième essai expérimental.

La figure 5 montre des résultats obtenus d'un troisième essai expérimental, mettant en oeuvre une variante de l'invention.

**EXPOSE DE MODES DE REALISATION PARTICULIERS**

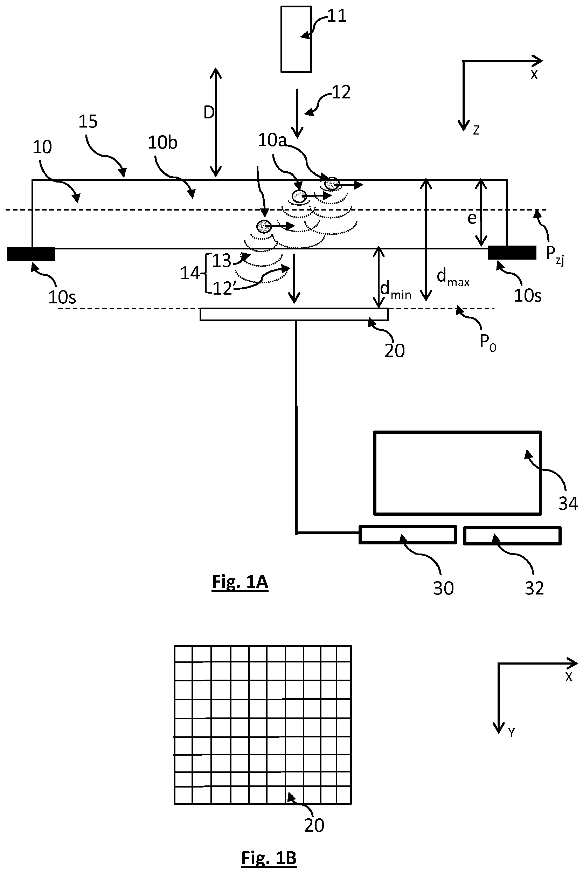

La figure 1A représente un exemple de dispositif permettant une mise en oeuvre de l'invention. Une source de lumière 11 est apte à émettre une onde lumineuse 12, dite onde lumineuse incidente, se propageant vers un échantillon 10, selon un axe de propagation Z. L'onde lumineuse est émise selon une bande spectrale $\Delta\lambda$.

L'échantillon 10 est un échantillon comportant des particules 10a que l'on souhaite dénombrer, les particules étant disposées dans un milieu fluidique porteur transparent ou translucide 10b.

Les particules sont des éléments de petite taille, et sont inscrites dans un diamètre compris entre 0.1 $\mu$m et 100 $\mu$m; ou entre 1 $\mu$m et 100 $\mu$m. Les particules sont solides ou liquides. Il peut s'agir de poussières, ou de cellules ou de microorganismes ou des microbilles, usuellement mises en oeuvre dans des applications biologiques, ou encore des microalgues. Il peut également s'agir de gouttelettes insolubles dans le fluide 10b, par exemple des gouttelettes d'huile dispersées dans une phase aqueuse. Le milieu porteur 10b est un fluide, par exemple de l'air ou un liquide, par exemple de l'eau ou un liquide biologique. L'échantillon peut être par exemple un aérosol, comportant des particules en suspension dans un gaz, ce dernier pouvant notamment être de l'air.

L'échantillon 10 est contenu dans une chambre fluidique 15. L'épaisseur e de l'échantillon 10, selon l'axe de propagation varie typiquement entre 10 $\mu$m et 2 cm ou 3 cm, et est de préférence comprise entre 20 $\mu$m et 1 cm. L'échantillon s'étend selon un plan, dit plan de l'échantillon, de préférence perpendiculaire à l'axe de propagation Z. La chambre fluidique 15 est maintenue sur un support 10s face au capteur d'image 20.

Les particules 10a sont mobiles dans la chambre fluidique 15, en étant portées par le fluide 10b, ce dernier étant mobile dans la chambre fluidique 15. Dans cet exemple, le fluide s'écoule, dans la chambre fluidique 15, selon un axe d'écoulement longitudinal X. Les particules 10a sont alors entraînées par le mouvement fluidique du milieu 10b, ce dernier agissant en tant que milieu porteur, et formant un courant fluidique à l'intérieur de la chambre fluidique 15. Le déplacement du milieu est modélisable. Les particules 10a peuvent également être mobiles par rapport au milieu 10b, le mouvement des particules par rapport au fluide qui les porte étant désigné par le terme mouvement particulaire. Ainsi, le déplacement des particules 10a dans la chambre fluidique 15 n'est pas aléatoire et obéit à un modèle de déplacement prédéterminé, combinant le mouvement fluidique du milieu 10b et, éventuellement, le mouvement particulaire des particules par rapport au fluide.

La distance D entre la source de lumière 11 et l'échantillon 10 est de préférence supérieure à 1 cm. Elle est de préférence comprise entre 2 et 30 cm. Avantageusement, la source de lumière, vue par l'échantillon, est considérée comme ponctuelle. Cela signifie que son diamètre (ou sa diagonale) est préférentiellement inférieur au dixième, mieux au centième de la distance entre l'échantillon et la source de lumière. Dans l'exemple représenté, la source de lumière 11 est une diode laser. Selon une variante, la source de lumière 11 est une source de lumière blanche ou une diode électroluminescente. Dans ce cas, un filtre spatial est avantageusement disposé entre la source de lumière et l'échantillon, de façon à ce que la source de lumière apparaisse comme ponctuelle. Le filtre spatial peut être un sténopé ou une fibre optique. Un filtre en longueur d'onde est également préférentiellement placé entre la source de lumière et l'échantillon, pour ajuster la bande spectrale d'émission Δλ de l'onde lumineuse incidente 12. De préférence, la bande spectrale d'émission Δλ de l'onde lumineuse incidente 12 a une largeur inférieure à 100 nm. Par largeur de bande spectrale, on entend une largeur à mi-hauteur de ladite bande spectrale.

La chambre fluidique 15 est disposée entre la source de lumière 11 et le capteur d'image 20 précédemment évoqué. Ce dernier s'étend de préférence parallèlement, ou sensiblement parallèlement au plan selon lequel s'étend l'échantillon. Le terme sensiblement parallèlement signifie que les deux éléments peuvent ne pas être rigoureusement parallèles, une tolérance angulaire de quelques degrés, inférieure à 20° ou 10° étant admise. Le capteur d'image 20 est apte à former une image $I$ selon un plan de détection $P_0$. Comme représenté sur la figure 1B, le capteur d'image comporte une matrice de pixels, à chaque pixel étant associée des coordonnées (x,y), dites coordonnées radiales, dans le plan de détection $P_0$. Le capteur d'image peut notamment être un capteur de type CCD ou un CMOS. Le plan de détection $P_0$ s'étend de préférence perpendiculairement à l'axe de propagation Z de l'onde lumineuse incidente 12. La distance entre l'échantillon 10 et la matrice de pixels du capteur d'image 20 est comprise entre une distance minimale $d_{min}$ et une distance maximale $d_{max}$. L'épaisseur e de la chambre fluidique correspond à la différence entre $d_{max}$ et $d_{min}$. $d_{min}$ peut être comprise entre 50 μm et 2 cm, de préférence comprise entre 100 μm et 2 mm. L'épaisseur de la chambre fluidique est généralement comprise entre 100 μm et 5 cm.

On remarque l'absence de système optique de formation d'image, en particulier d'optique de grossissement entre le capteur d'image 20 et l'échantillon 10. Cela n'empêche pas la présence éventuelle de microlentilles de focalisation au niveau de chaque pixel du capteur d'image 20, ces dernières n'ayant pas de fonction de grandissement de l'image acquise par le capteur d'image. Le capteur d'image 20 est ainsi placé selon une configuration dite d'imagerie sans lentille. Une telle configuration permet d'obtenir un champ d'observation élevé. D'autres configurations sont néanmoins envisageables, en particulier une configuration selon laquelle une optique de focalisation est interposée entre le capteur d'image 20 et la chambre fluidique 15. Dans une telle configuration, le capteur d'image acquiert une image défocalisée de l'échantillon 10, comme décrit dans EP3031180.

Sous l'effet de l'onde lumineuse incidente 12, les particules présentes dans la chambre fludique 15 peuvent engendrer une onde diffractée 13, susceptible de produire, au niveau du plan de détection $P_0$, des interférences avec une partie de l'onde lumineuse incidente 12 transmise par l'échantillon. Par ailleurs, l'échantillon peut absorber une partie de l'onde lumineuse incidente 12. Ainsi, l'onde lumineuse 14, dite onde lumineuse d'exposition, transmise par l'échantillon 10 et à laquelle est exposé le capteur d'image 20, peut comprendre :

- une composante 13 résultant de la diffraction de l'onde lumineuse incidente 12 par chaque particule de l'échantillon ;
- une composante 12' résultant de l'absorption de l'onde lumineuse incidente 12 par l'échantillon.

Ces composantes forment des interférences dans le plan de détection. Aussi, l'image $I$ acquise par le capteur d'image 20 comporte des figures d'interférences (ou figures de diffraction), chaque figure d'interférence étant générée par une particule 10a de l'échantillon 10.

Un processeur 30, par exemple un microprocesseur, est configuré pour traiter chaque image $I$ acquise par le capteur d'image 20. En particulier, le processeur est un microprocesseur relié à une mémoire programmable 32 dans laquelle est stockée une séquence d'instructions pour effectuer les opérations de traitement d'images et de calculs décrites dans cette description. Le processeur peut être couplé à un écran 34 permettant l'affichage d'images acquises par le capteur d'image 20 ou calculées par le processeur 30.

La chambre fluidique 15 est fixe par rapport au capteur d'image 20. Ainsi, le milieu fluidique 10b et les particules 10a circulant dans la chambre fluidique sont en mouvement par rapport au capteur d'image 20.

Comme indiqué en relation avec l'art antérieur, on peut appliquer, à chaque image acquise par le capteur d'image, un opérateur de propagation h, de façon à calculer une grandeur complexe représentative de l'onde lumineuse d'exposition 14. Il est alors possible de calculer une expression complexe $A$ de l'onde lumineuse 14 en tout point de coordonnées (x,y,z) de l'espace, et en particulier selon une surface de reconstruction s'étendant face au capteur d'image 20. La surface de reconstruction est usuellement un plan $P_z$, dit plan de reconstruction, s'étendant parallèlement au capteur d'image 20, à une coordonnée z du plan de détection $P_0$. Le plan de reconstruction $P_z$ est alors parallèle au plan de détection $P_0$. On obtient alors une image, dite image complexe $A_z$, représentative de l'onde lumineuse d'exposition 14 dans le plan de reconstruction $P_z$. L'image complexe $A_z$ est obtenue par une convolution de l'image $I$ acquise par le capteur d'image 20 par l'opérateur de propagation $h$, selon l'expression : $A_z = I * h$.

L'opérateur de propagation h décrit la propagation de la lumière entre le plan de détection $P_0$ et le plan de reconstruction $P_z$. Dans cet exemple, le plan de détection $P_0$ a pour équation z = 0.

L'opérateur de propagation est par exemple un opérateur dit de Fresnel, défini selon l'expression suivante :

$$h_z(x, y) = \frac{-i}{\lambda z} e^{\frac{i\pi}{\lambda z}(x^2 + y^2)} \text{ (1)}$$

Une particularité de l'invention est que les particules 10a se déplacent, en étant entraînées par le fluide 10b. Le fluide se déplace entre une entrée et une sortie de la chambre fluidique 15, selon un axe d'écoulement X. Afin de procéder à leur comptage, il est nécessaire d'obtenir des positions tridimensionnelles des particules à un premier instant $t_1$ et à un deuxième instant $t_2$, postérieur au premier instant, le décalage temporel $\Delta t = t_2 - t_1$ entre les deux instants dépendant d'une vitesse maximale $V_{max}$ du fluide dans la chambre fluidique 15 ainsi que de la dimension de la partie de la chambre fluidique vue par le capteur. Si L désigne une dimension de la chambre fluidique 15, vue par le capteur

$$\Delta t < \frac{L}{2} V_{max}$$

d'image 20, selon l'axe de propagation X du fluide, il est préférable que : .

Différents modes de réalisation sont envisageables. Selon un premier mode de réalisation, le capteur d'image acquiert deux images successives $I(t_1)$ et $I(t_2)$, respectivement au premier instant $t_1$ et au deuxième instant $t_2$. A partir de chaque image, on obtient des coordonnées tridimensionnelles des particules à chaque instant. Selon un deuxième mode de réalisation, on acquiert une même image de la chambre fluidique aux deux instants, l'acquisition de cette image étant réalisée au premier instant et au deuxième instant.

Les principales étapes du premier mode de réalisation du procédé sont décrites ci-après, en lien avec la figure 2A.

Etape 100 : acquisition. Il s'agit d'acquérir une image $I(t_i)$ à différents instants $t_i$, selon une fréquence d'acquisition. Lors d'une première itération, l'instant $t_i$ est un premier instant $t_1$ et on acquiert une image dite première image $I(t_1)$. Lors d'une deuxième itération, l'instant $t_i$ est un deuxième instant $t_2$, le deuxième instant étant postérieur au premier instant. L'image acquise à l'instant $t_2$ est une deuxième image $I(t_2)$.

Etape 110 : extraction d'une image d'intérêt à partir de l'image acquise, l'image d'intérêt représentant une composante mobile $I_m(t_i)$ de l'image acquise. L'image acquise $I(t_i)$ comporte une composante $I_f(t_i)$, dite composante fixe, représentant les éléments considérés comme non dépendants du temps, et une composante $I_m(t_i)$ dite composante mobile, représentant les éléments considérés comme en mouvement dans l'image. Les particules se déplaçant dans l'échantillon sont en mouvement et forment la composante de mouvement. Le premier filtrage vise à retirer la composante fixe de l'image acquise. La composante fixe peut être obtenue au moyen d'une ou de plusieurs images acquises à différents instants différents de l'instant d'acquisition de l'image filtrée. La composante fixe $I_f(t_i)$ peut être estimée par une image initiale $I(t_0)$, acquise alors qu'aucune particule ne circule dans la chambre fluidique 15. Cela permet d'obtenir une image des éléments fixes, par exemple des poussières, non représentatifs des particules mobiles à dénombrer. De préférence, la composante fixe $I_f(t_i)$ est estimée par une moyenne entre une image acquise à un instant antérieur et une image acquise à un instant postérieur à l'instant d'acquisition $t_i$ de l'image acquise. Il peut s'agir par exemple de l'instant précédent $t_{i-1}$ et de l'instant suivant $t_{i+1}$ l'instant d'acquisition $t_i$, auquel cas la composante fixe est telle que

$$I_f(t_i) = \frac{I(t_{i+1}) + I(t_{i-1})}{2} \ (2)$$

L'estimation de la composante fixe est ainsi renouvelée à chaque nouvelle acquisition d'une image. Elle correspond à une moyenne de deux images respectivement acquises avant et après l'image acquise considérée, la moyenne étant pondérée par un facteur de pondération de ½. Cela permet une mise à jour régulière de la composante fixe.

La composante fixe est soustraite de chaque image acquise, de façon à obtenir une composante mobile $I_v$, représentative des éléments mobiles dans l'image, et en particulier des particules mobiles. $I_v(t_i) = I(t_i) - I_f(i)$ (3).

La composante mobile forme une image d'intérêt sur la base de laquelle les étapes suivantes sont effectuées. Lors du premier instant $t_1$, l'image d'intérêt est notée $I_v(t_1)$. Lors du deuxième instant $t_2$, l'image d'intérêt est notée $I_v(t_2)$.

Les figures 2B à 2D représentent des exemples modélisés de profils d'intensité d'un hologramme, correspondant à une particule, sur une image acquise par le capteur d'image 20, respectivement aux instants $t_{i-1}$, $t_i$, et $t_{i+1}$. La particule se déplace selon l'axe d'écoulement du fluide X, ce qui se traduit par une translation de l'hologramme, ce dernier étant représenté par une accolade sur chacune de ces figures. Les ondulations observées de part et d'autre de l'hologramme correspondent à l'effet d'imperfections de montage. Ces imperfections sont notamment les non uniformités d'éclairement et les interférences entre des réflexions ayant lieu aux interfaces de la chambre. Cela se traduit par le fait que sur les figures 2B, 2C et 2D, les profils au niveau des hologrammes sont dissymétriques et différents. La figure 2E montre la composante fixe, $I_f(t_i)$ telle que déterminée selon l'expression (2). La composante fixe $I_f(t_i)$ comporte l'effet des imperfections du montage ainsi que les hologrammes correspondant aux instants $t_{i-1}$ et $t_{i+1}$, ces derniers étant pondérés d'un facteur de pondération égal à ½. La figure 2F représente la composante mobile $I_v(t_i)$ obtenue selon l'expression (3). On observe que l'effet des imperfections a disparu. L'hologramme central, correspondant à la position de la particule à l'instant $t_i$, est symétrique. Les hologrammes correspondant aux instants $t_{i-1}$ et $t_{i+1}$ sont aussi symétriques et sont pondérés avec un facteur de pondération égal à -1/2. Ces hologrammes résiduels sont appelé échos.

Ainsi, cette étape permet d'estimer une composante mobile $I_v(t_i)$ de l'image acquise, cette composante mobile étant représentative des éléments mobiles, par rapport au capteur d'image, à l'instant d'acquisition $t_i$. Cette composante

mobile $I_v(t_i)$ permet de mieux faire apparaître les particules mobiles que l'on cherche à dénombrer.

Etape 120 : filtrage fréquentiel. L'image d'intérêt $I_v(t_i)$, résultant de l'étape 110 fait l'objet d'un filtrage fréquentiel passe-bande : un tel filtrage permet d'éliminer des basses fréquences spatiales, liées à des hétérogénéités de l'illumination de l'échantillon, ainsi que des fréquences spatiales élevées, ces dernières étant considérées comme un bruit. La bande passante du filtre fréquentiel est de préférence comprise entre une fréquence de coupure basse et une fréquence de coupure haute. La fréquence de coupure basse peut être égale à 0,02 $f$. La fréquence de coupure haute peut être égale à 0,5 f. $f$ est une fréquence correspondant à la moitié de la fréquence spatiale définie par la taille des pixels : $f = \frac{1}{2\ell}$. $\ell$ représentant une dimension d'un pixel (longueur ou largeur).

Etape 130 : propagation de l'image filtrée. L'image résultant de l'étape 120 est propagée selon différentes distances de reconstruction $z_j$, selon l'axe de propagation Z. Les distances de reconstruction sont déterminées de telle sorte que les plans de reconstructions $P_{z_j}$ respectivement associés à chaque distance de reconstruction $z_j$ sont compris dans l'échantillon. Ainsi, à partir chaque image acquise $I(t_i)$, après les étapes d'extraction de l'image d'intérêt 120 et de filtrage 130, on forme une pile d'images complexes $A_{z_j}(t_i)$ reconstruites à différentes distances de reconstruction $z_j$. Si $d_{min}$ et $d_{max}$ désignent respectivement la distance minimale et la distance maximale entre l'échantillon et le capteur d'image, la reconstruction est effectuée de façon à obtenir différents plans de reconstruction entre $d_{min}$ et $d_{max}$. Le nombre de distances de reconstruction considérées conditionne la résolution spatiale avec laquelle les coordonnées des particules sont déterminées, comme décrit ci-après. L'intervalle entre deux distances de reconstruction différentes peut par exemple être de 100 μm. A l'issue de cette étape, on dispose d'une pile d'images complexes, chaque image complexe s'étendant parallèlement au plan de détection, à une coordonnée $z_j$, dite coordonnée transversale.

Etape 140 : Extraction d'une composante de chaque image complexe. Il s'agit d'associer, à chaque pixel de l'image complexe, un nombre réel. Ainsi, la pile d'images complexes $A_{z_j}(t_i)$ est remplacée par une pile d'images $A'_{z_j}(t_i)$ de nombres réels, chaque pixel $A'_{z_j}(t_i,x,y)$ de chaque image réelle étant une composante $comp(A'_{z_j}(t_i,x,y))$ d'une image complexe $A_{z_j}(t_i)$, à la coordonnée transversale $z_j$, à la même coordonnée radiale (x,y) (c'est-à-dire au même pixel). Par composante d'une image complexe, on entend une grandeur obtenue à partir de l'image complexe à la coordonnée radiale *(x, y)*. La composante peut être ou comporter la partie réelle, la partie imaginaire, ou le module, ou la phase, de l'amplitude complexe $A_{z_j}(x,y)$ de l'image complexe $A_{z_j}(t_i)$ à la position radiale *(x, y)*. La composante peut combiner des grandeurs listée dans la phrase précédente. On recherche ici à obtenir une coordonnée transversale $z_j$, notée $z_{xy}$, maximisant la composante, et cela pour chaque coordonnée radiale *(x, y)*. Cette maximisation fait l'objet de l'étape 145.

Les figures 2G et 2H représentent respectivement un profil d'une composante d'une image complexe reconstruite, à une coordonnée radiale $z_j$, l'image complexe étant obtenue par reconstruction holographique de l'image $I_v(t_i)$ dont le profil est représenté sur la figure 2F. Sur la figure 2G, on a représenté le profil du module de l'image complexe reconstruite. Sur la figure 2H, on a représenté le profil de l'opposé de la partie réelle de l'image complexe reconstruite. Autrement dit, les figures 2G et 2H représentent le profil d'une image de nombre réels obtenus après extraction d'une composante de l'image complexe reconstruite, la composante étant respectivement le module, $|A_{z_j}(x,y)|$, ou l'opposé de la partie réelle, $-Re(A_{z_j}(x, y))$. On observe que lorsque la composante est l'opposé de la partie réelle, l'hologramme central, visible sur le profil de la figure 2H, est représenté par une valeur élevée et positive. Les hologrammes situés de part et d'autres de l'hologramme central correspondent à des résidus, ou échos, issus de l'extraction de l'image de la composante mobile. Leur amplitude est plus faible que celle de l'histogramme central, et est négative. On comprend qu'il sera plus facile de discriminer l'hologramme central, correspondant à la particule à l'instant $t_i$, des hologrammes correspondant à un résidu (ou écho) de la particule aux instants antérieur $t_{i-1}$ et postérieur $t_{i+1}$, ces hologrammes n'étant pas représentatifs de la particule à l'instant $t_i$. Sur le profil de la figure 2G, l'hologramme de la particule à l'instant $t_i$ se traduit par un pic d'amplitude positive et élevée, tandis que les hologrammes de la particule aux instants antérieur $t_{i-1}$ et postérieur $t_{i+1}$ se traduisent par des pics d'amplitude également positive, mais moins élevée. On comprend qu'il est plus difficile de discriminer, sur la base du module, les hologrammes "utiles", c'est-à-dire correspondant à une position de la particule, aux hologrammes d'échos, correspondant à une position d'une particule à un instant antérieur ou postérieur.

La comparaison des figures 2G et 2H montre que le fait de considérer la partie réelle, ou son opposé, présente un avantage, en particulier par rapport à des approches classiques de reconstruction holographique, selon lesquelles on considère le module d'une amplitude complexe. En effet, contrairement à un module, une partie réelle d'une image est signée, dans le sens qu'elle peut être positive ou négative. Elle permet d'effectuer une discrimination sur la base d'un signe, ce qui n'est pas possible lorsqu'on considère des modules. La prise en compte de la partie réelle apparaît particulièrement pertinente lorsqu'elle fait suite à des combinaisons arithmétiques d'images comportant une soustraction d'images.

Etape 145 : Focalisation numérique. Au cours de cette étape, on recherche, pour chaque pixel de l'image acquise, c'est-à-dire pour chaque position radiale (x,y), une coordonnée transversale $z$, selon l'axe de propagation Z pour laquelle la composante $comp(A_{z_j}(t_i))$ d'une image complexe $A_{z_j}$ de la pile d'images, au pixel de coordonnées (x,

*y*), est maximale. Il s'agit d'appliquer un principe dit de focalisation numérique connu de l'homme du métier. Une particule est présente à une distance inconnue du capteur d'image. Plus la distance de reconstruction rapproche de cette distance, plus la particule forme, sur l'image complexe reconstruite, une tache étroite et intense. L'image complexe comportant une partie réelle et une partie imaginaire, la recherche de la distance séparant la particule du détecteur est réalisée en analysant l'évolution spatiale d'une composante de chaque image complexe selon l'axe de propagation. on détermine $z_{xy}$, tel que

$$z_{xy} = \operatorname*{argmax}_{z_j} \left( comp(A_{z_j}(x,y)) \right) = \operatorname*{argmax}_{z_j} \left( -Re(A_{z_j}(x,y)) \right) (4).$$

Cette étape est répétée pour tout ou partie des positions radiales (*x, y*) du capteur d'image de façon qu'à chaque coordonnée radiale (x,y) soit associée une coordonnée transversale $z_{x,y}$ telle que définie dans l'expression (4).

Etape 150 : formation de l'image des maximas.

Suite à l'étape 145, on constitue une image dite des maximas, telle que :

$$A_{max}(x,y) = comp(A_{z_{xy}}(x,y)) = -Re(A_{z_{xy}}(x,y)) (5).$$

Cette image comporte, à chaque pixel (x,y), la valeur maximale de la composante, dans la pile d'images complexes $A_{z_j}$, le long de l'axe de propagation Z, déterminée lors de l'étape 145. A chaque pixel (x,y) de l'image des maximas $A_{max}$ est associée la coordonnée transversale $z_{xy}$ identifiée lors de l'étape 145.

Lors de la première itération (*$t_i = t_1$*), on obtient une première image des maximas. Lors de la deuxième itération (*$t_i = t_2$*), on obtient une deuxième image des maximas.

Etape 160 : recherche de maximas locaux dans l'image des maximas.

Au cours de cette étape, une recherche de valeurs maximales locales est réalisée par groupes de pixels adjacents. Par exemple, chaque groupe de pixels comporte 51 * 51 pixels adjacents. Un pixel de l'image des maximas $A_{max}$ est considéré comme maximal local si il est le pixel présentant la valeur la plus élevée dans un groupe de 51* 51 pixels centré sur ledit pixel, formant une zone de voisinage du pixel. L'image des maximas $A_{max}$ peut faire l'objet d'un lissage avant la recherche de maximas locaux. Il peut s'agir d'un lissage par application d'un filtre gaussien ou d'un filtre passe-bas.

On peut ainsi obtenir une liste des coordonnées de chaque pixel maximum local ($x_{max}, y_{max}$) ainsi que la valeur $A_{maxi}(x_{max}, y_{max})$ de l'image des maximas $A_{max}$ à ce pixel, ainsi que de la coordonnée transversale $z_{x_{max}y_{max}}$ associée à ce pixel. D'autres algorithmes connus de focalisation numérique peuvent être appliquées à la pile d'images résultant de l'étape 140, permettant de définir une telle liste. De tels algorithmes peuvent par exemple se baser sur un critère de netteté sur chaque image de la pile d'images. Ces algorithmes permettent également de définir des maximas locaux ainsi qu'une coordonnée transversale associée à ces maximas locaux.

Etape 170 : prise en compte du rapport signal sur bruit.

La recherche de maximas locaux dans l'image des maximas $A_{max}$ peut être affectée par un fond non homogène. Ce fond non homogène est notamment causé par des fluctuations de franges d'interférences produites par les multiples interfaces entre la source de lumière 11 et le capteur d'image 20. De ce fait, les inventeurs ont considéré qu'il est préférable de prendre en compte un rapport signal sur bruit à chaque coordonnée radiale déterminée lors de l'étape 160. Ainsi, à chaque position radiale $x_{max}, y_{max}$ définie lors de l'étape 160, on calcule un rapport signal sur bruit $SNR(x_{max}, y_{max})$, ce rapport étant calculé à l'aide de l'information contenue dans l'image des maximas $A_{max}$. Un niveau de bruit local est calculé, dans l'image des maximas, autour de chaque position radiale *($x_{max}, y_{max}$)*, par exemple dans une zone de calcul de bruit centrée sur la position ($x_{max}, y_{max}$) et de diamètre égal à 200 pixels. Les pixels considérés pour le calcul du bruit local peuvent être l'ensemble des pixels de la zone de calcul de bruit, ou certains pixels de cette zone. Les inventeurs ont par exemple pris en compte 100 pixels régulièrement répartis sur le cercle délimitant la zone de calcul de bruit, le niveau de bruit étant estimé par un calcul de la médiane de la valeur de ces 100 pixels.

Cette étape permet d'établir une liste des coordonnées radiales ($x_{max}, y_{max}$) correspondant à un maximum local dans l'image des maximas, chaque couple de coordonnées radiales étant associé à une coordonnée transversale $z_{x_{max}y_{max}}$. On dispose alors d'une liste de positions tridimensionnelles ($x_{max}, y_{max}, z_{x_{max}y_{max}}$) dans l'échantillon susceptible de comporter une particule. A chaque position tridimensionnelle ($x_{max}, y_{max}, z_{x_{max}y_{max}}$) est associée une estimation du rapport signal à bruit $SNR(x_{max}, y_{max})$ de l'image $A_{max}$ à la position ($x_{max}, y_{max}$). Chacune de ces positions tridimensionnelles est susceptible d'être occupée par une particule 10a à l'instant $t_i$ considéré.

Etape 180 : seuillage. Au cours de cette étape, les positions tridimensionnelles font l'objet d'un seuillage du rapport signal à bruit qui leur est respectivement affecté. Le seuillage est réalisé selon une valeur seuil S pouvant être prédéterminée. Seules les positions tridimensionnelles dont le rapport signal à bruit associé est supérieur à la valeur seuil sont conservées, les autres étant considérées comme non représentatives de particules. Le seuil peut être prédéterminé, par exemple sur la base de calibrations, ou optimisé comme décrit ultérieurement, en lien avec l'étape 250.

Etape 190 : réitération. Les étapes 110 à 180 sont réitérées sur la base d'une image $I(t_2)$ acquise au deuxième instant $t_2$. Cela permet d'obtenir une liste de positions tridimensionnelles $(x_{max}, y_{max}, z_{x_{max}y_{max}})$ à l'instant $t_2$, ainsi que d'un rapport signal sur bruit associé à chaque position. Ainsi, à l'issue de l'étape 190, on dispose d'une première liste de positions tridimensionnelles $(x_{max}, y_{max}, z_{x_{max}y_{max}})(t_1)$ au premier instant $t_1$ et d'une deuxième liste de positions tridimensionnelles $(x_{max}, y_{max}, z_{x_{max}y_{max}})(t_2)$ au deuxième instant $t_2$, ainsi que d'un rapport signal sur bruit associé à chaque position.

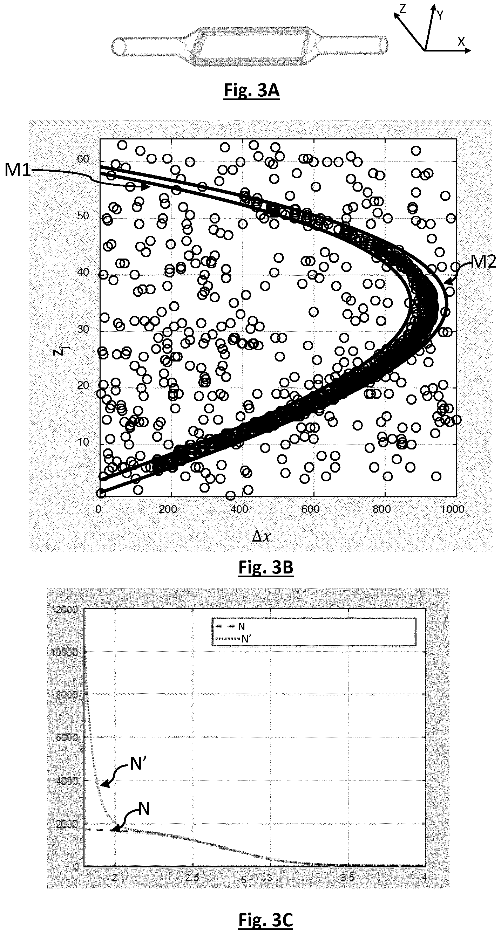

Etape 200 : Calcul des déplacements potentiels. Au cours de cette étape, on détermine des déplacements potentiels $\Delta$ résultant de la comparaison entre chaque position tridimensionnelle au premier instant $(x_{max}, y_{max}, z_{x_{max}y_{max}})(t_1)$ et au deuxième instant $(x_{max}, y_{max}, z_{x_{max}y_{max}})(t_2)$. Il en résulte une liste de vecteurs de déplacements potentiels, dont les coordonnées représentent des déplacements potentiels. La figure 3B représente des vecteurs de déplacements dont les coordonnées sont indiquées selon l'axe X (axe des abscisses) et l'axe Z (axe des ordonnées). Chaque vecteur de déplacement correspond à un couple comprenant une position tridimensionnelle d'une particule $(x_{max}, y_{max}, z_{x_{max}y_{max}})(t_1)$, au premier instant, choisie dans la première liste et une autre position d'une tridimensionnelle d'une particule $(x_{max}, y_{max}, z_{x_{max}y_{max}})(t_2)$, au deuxième instant, choisie dans la deuxième liste. Un premier tri est effectué, sur la base d'un déplacement minimal et d'un déplacement maximal selon chaque axe, ainsi que sur la base d'un critère relatif au rapport signal sur bruit affecté à chaque position tridimensionnelle : le rapport signal sur bruit $SNR(x_{max}, y_{max})$ de la position au premier instant doit correspondre au rapport signal sur bruit affecté à la position au deuxième instant à une incertitude près.

Etape 210 : Prise en compte d'un modèle de déplacement *mod.* Il s'agit de se baser sur une connaissance des paramètres cinématiques du déplacement des particules 10a dans la chambre fluidique 15. Par exemple, le milieu 10b dans lequel évoluent les particules 10a est en mouvement dans la chambre fluidique 15, le milieu 10b portant les particules. Le mouvement du milieu 10b peut être modélisé, les particules étant considérées comme suivant le mouvement du milieu, au moins dans un plan. Par exemple, lorsque la chambre fluidique 15 est horizontale, les particules sont supposées suivre le modèle du déplacement dans le plan horizontal, à une fluctuation près correspondant à un mouvement des particules dans un plan vertical, ce dernier étant dû à la gravité et dépendant de la masse des particules.

La prise en compte du modèle de déplacement *mod* permet de définir une plage de déplacement, s'étendant entre une première borne et une deuxième borne. La plage de déplacement définit les coordonnées des vecteurs de déplacements possibles compte tenu du modèle de déplacement adopté. Les déplacements potentiels situés en dehors de la plage de déplacement sont invalidés.

Le modèle de déplacement peut être un modèle paramétrique, dont les paramètres sont ajustés expérimentalement, en se basant sur un traitement statistique des déplacements détectés sur une série d'acquisitions d'images. La figure 3B représente par exemple sous forme d'un nuage de points l'ensemble des déplacements obtenus suite à une analyse d'une série de 500 acquisitions d'images. Chaque déplacement est représenté par un cercle dont l'abscisse est la composante $\Delta x$ du déplacement selon l'axe longitudinal X et dont l'ordonnée est la coordonnée du plan de reconstruction $z_j$ correspondant à la position de la particule au départ du déplacement. Les points ayant la même ordonnée correspondent à des déplacements dont la position de départ est située dans un plan parallèle au capteur d'image situé à la distance $z_j$ de ce dernier. La prise en compte de multiples acquisitions d'images permet de constituer des données relatives au déplacement, dont la statistique est suffisante pour déterminer ou ajuster les paramètres du modèle. Le nuage de points présente nettement une zone de forte densité qui a une forme de boomerang.

Au niveau du centre de la chambre fluidique 15 ($z_j$ proche de 35), les déplacements ont une amplitude maximale. Au niveau des bordures de la chambre fluidique 15 ($z_j$ proche de 0 ou $z_j$ proche de 60), les déplacements sont plus faibles, du fait de la présence des parois de la chambre fluidique. Ainsi, de préférence, le modèle de déplacement est tridimensionnel, de façon à prendre en compte d'une distribution de vitesse d'écoulement du fluide dans un plan transversal YZ perpendiculaire à l'axe d'écoulement X du fluide, en particulier du fait des effets de bords résultant des parois de la chambre fluidique 15.

Dans cet exemple, la forme de boomerang est modélisé par un polynôme de degré 3. Les coefficients de ce polynôme peuvent être déterminés par un ajustement quadratique par rapport aux données mesurées. On peut ainsi déterminer ou affiner les paramètres du modèle, sur la base des images acquises. Ainsi, on se base sur un modèle de déplacement paramétrique, les paramètres du modèle pouvant être déterminé ou mis à jour par les mesures expérimentales.

Sur la figure 3B, on a également représenté une plage correspondant à une tolérance admise par rapport au modèle, qui est la zone comprise entre les courbes M1 et M2.

Etape 220 : validation de déplacements.

Au cours de l'étape 220, les déplacements potentiels $\Delta$ déterminés lors de l'étape 200 sont comparés à la plage de déplacement définie lors de l'étape 210. Les déplacements non compris dans la plage de déplacement sont considérés comme invalides et sont éliminés. Les déplacements $\Delta_v$ compris dans la plage sont validés. Dans l'exemple de la figure 3B, la plage de déplacement est définie selon un plan $(\Delta x, z_j)$, auquel cas la validation est réalisée sur la base d'une projection de chaque vecteur de déplacement potentiel selon ce plan.

Etape 230 : définition des positions et/ou du nombre particules correspondant à des déplacements valides.

Chaque déplacement $\Delta_v$ validé au cours de l'étape 220 permet de définir une position d'une particule au premier instant et une position d'une particule au deuxième instant. On détermine alors une liste de positions $(x, y, z)(t_1)$ validées de particules au premier instant et une liste positions $(x, y, z)(t_2)$ de particules validées au deuxième instant. Cette liste est réalisée en considérant qu'au premier instant et au deuxième instant, une particule n'est associée qu'à un seul déplacement. Chaque liste ainsi obtenue permet d'estimer une position des particules au premier instant, ainsi qu'une position des particules au deuxième instant, ainsi que le nombre $N$ de particules 10a circulant dans la chambre fluidique 15.

De préférence, pour valider la position d'une particule à un instant $t_i$ on considère 3 instants différents, par exemple trois instants successifs $t_{i-1}$, $t_i$ et $t_{i+1}$. L'instant $t_i$ représente un instant dit courant, les instants $t_{i-1}$ et $t_{i+1}$ étant des instants respectivement antérieur et postérieur à l'instant courant. A partir des déplacements $\Delta_v(t_{i-1}, t_i)$ validés entre $t_{i-1}$ et $t_i$, on établit une première liste de couples de positions entre les instants $t_{i-1}$ et $t_i$. A partir de déplacements $\Delta_v(t_i, t_{i+1})$ validés entre $t_i$ et $t_{i+1}$, on établit une deuxième liste de couples de positions entre les instants $t_i$ et $t_{i+1}$. La liste des particules à l'instant courant $t_i$ est obtenue en réalisant l'union de la première liste et de la deuxième liste, les doublons étant éliminés.

Etape 250 : optimisation du seuil

Un paramètre pouvant être important pour la mise en oeuvre du procédé est le seuil S utilisé lors de l'étape 180, pour sélectionner ou non des positions de particules. Ce seuil conditionne le nombre de particules considérées pour établir les déplacements potentiels. La figure 3C représente une évolution du nombre de particules comptées, en mettant en oeuvre le procédé décrit ci-dessus, dont le rapport signal sur bruit est supérieur à la valeur de l'abscisse. Une telle représentation permet une modification a posteriori du seuil, en fixant par exemple la valeur du seuil à une valeur optimale correspondant à une partie la plus plate de la courbe. Les inventeurs considèrent qu'un seuil optimal correspond à une partie la plus plate de la courbe, c'est-à-dire à une dérivée faible, la dérivée étant calculée par rapport à la valeur du seuil. Dans l'exemple représenté sur la figure 3C, et décrit ci-après, la valeur optimale du seuil, en mettant en oeuvre le procédé, est de 2.2 ou 2.3. Il est donc possible de supprimer la posteriori les particules dont présentant un rapport signal à bruit inférieur au seuil.

A titre de comparaison, la figure montre également une évolution du nombre de particules N' comptées sans considérer un déplacement, c'est-à-dire en ne se basant que sur une image acquise à un instant donné. On observe que la prise en compte de déplacements permet de réduire le nombre de particules dénombrées, en particulier lorsque le seuil est faible.

Au cours d'un premier essai expérimental, on a utilisé une chambre fluidique, telle que représentée sur la figure 3A, orientée verticalement. L'essai a été réalisé selon une configuration telle que décrite sur la figure 1, l'axe X, selon lequel se propagent les particules, étant vertical et orienté vers le bas.

L'échantillon est constitué de particules de polystyrène de diamètre 1 $\mu$m circulant dans un flux d'air. Les paramètres expérimentaux sont les suivants :

- Chambre fluidique : Starna type 45-F : dimensions internes de 5 x 10 x 45 mm.
- Source de lumière : diode laser CiviLaser - 405 nm - durée d'une impulsion 100 $\mu$s.
- Capteur d'image : CMOS MIGHTEX BTN-B050-U - 2592 x 1944 pixels de taille 2.2 $\mu$m x 2.2 $\mu$m.
- Fréquence d'acquisition : 10 Hz.

On a utilisé 64 plans de reconstruction, correspondant à des distances, par rapport au capteur d'image, régulièrement espacées entre 1.5 mm et 7.8 mm.

A chaque instant on détermine une liste de particules, de coordonnées $(x, y, z)$. Etant dans un cas de signaux faibles, la détection est faite en privilégiant la détection d'une grande fraction des particules avec l'inconvénient d'avoir de nombreuses fausses détections.

A partir des positions des particules à deux instants successifs, on détermine les déplacements potentiels $\Delta$, ces derniers étant représentés sous la forme de cercles, présentant une coordonnée $\Delta x$ selon l'axe X, une coordonnée $\Delta z$ selon l'axe Z et une coordonnée $\Delta y$ selon l'axe Y. Les déplacements potentiels ont été obtenus en prenant en compte les critères de tri suivant : $0 \leq \Delta x \leq 2.2$ mm ; $0 \leq \Delta y \leq 66$ $\mu$m ; $0 \leq \Delta z \leq 200$ $\mu$m.

La figure 3B illustre ces déplacements potentiels sous forme d'un nuage de points dans le plan $(\Delta x, Z)$. Un modèle de déplacement a été pris en compte, formant des bornes représentées par les courbes M1 et M2 tracées sur la figure 3B. Les déplacements situés entre ces courbes ont été validés.

A partir des déplacements validés $\Delta v$, on a dénombré le nombre N de particules, en fonction du seuil de rapport signal sur bruit considéré lors de l'étape 180, l'évolution du nombre N de particules comptées en fonction du seuil S de rapport signal sur bruit étant représentée sur la figure 3C. Cette figure représente également un nombre de particules $N'$ en fonction du seuil de rapport signal sur bruit, sans prendre en compte le déplacement. On constate qu'au-delà d'un certain seuil, l'estimation sans prise en compte du déplacement est fiable.

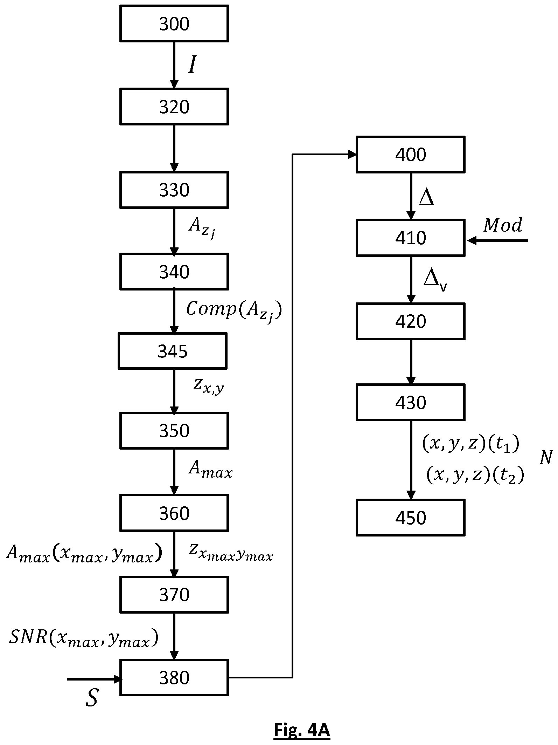

Selon un deuxième mode de réalisation, on illumine l'échantillon par deux impulsions respectivement à un premier instant $t_1$ et à un deuxième instant $t_2$, et on acquiert une image $I$ dont la durée d'acquisition comprend le premier instant et le deuxième instant. Ainsi, sur une même image, on obtient un signal représentatif des positions des particules au premier et au deuxième instant. Les étapes de ce mode de réalisation sont représentées sur la figure 4A, et décrites ci-après :

Etape 300 : illumination successive de l'échantillon au premier instant et au deuxième instant, et acquisition d'une image $I$, dite première image, au cours du premier instant et au cours du deuxième instant. L'intervalle temporel entre les deux instants peut être très court, par exemple de 5ms.

Etape 320 : filtrage fréquentiel, de façon analogue à l'étape 120.

Etape 330 : propagation de l'image filtrée, de façon analogue à l'étape 130, pour obtenir une pile d'images complexes

Etape 340 : extraction d'une composante de chaque image complexe de la pile d'images complexes.

Etape 345 : focalisation numérique, de façon analogue à l'étape 145.

Etape 350 : formation d'une image des maximas à partir de l'image acquise, de façon analogue à l'étape 150.

Etape 360 : recherche de maximas locaux dans l'image des maximas, de façon analogue à l'étape 160.

Etape 370 : prise en compte du rapport signal sur bruit, de façon analogue à l'étape 170. Cette étape permet d'établir une liste des coordonnées radiales $(x_{max}, y_{max})$ correspondant à un maximum local dans l'image des maximas, chaque couple de coordonnées radiales étant associé à une coordonnée transversale $z_{x_{max}y_{max}}$. On dispose alors d'une liste de positions tridimensionnelles $(x_{max}, y_{max}, z_{x_{max}y_{max}})$ dans l'échantillon susceptible de comporter une particule. A chaque position tridimensionnelle $(x_{max}, y_{max}, z_{x_{max}y_{max}})$ est associée une estimation du rapport signal à bruit $SNR(x_{max}, y_{max})$ de l'image $I_{max}$ à la position $(x_{max}, y_{max})$. A la différence du premier mode de réalisation, chacune de ces positions tridimensionnelles est susceptible d'être occupée par une particule 10a au premier instant $t_1$ ou au deuxième instant $t_2$.

Etape 380 : seuillage en fonction d'un seuil de rapport signal sur bruit, de façon analogue à l'étape 180. Seules les positions tridimensionnelles dont le rapport signal à bruit associé est supérieur à la valeur seuil sont conservées, les autres étant considérées comme non représentatives de particules.

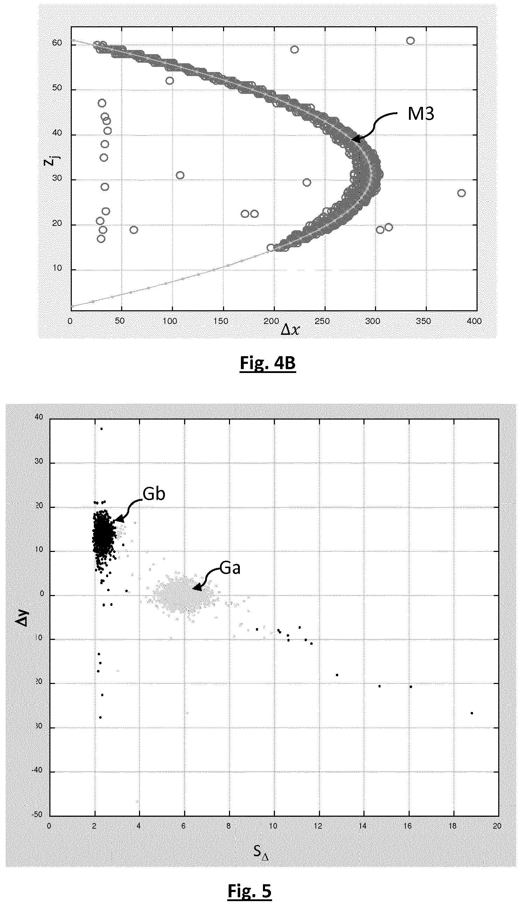

Etape 400 : Calcul des déplacements potentiels. Au cours de cette étape, on détermine des déplacements potentiels $\Delta$ résultant de la comparaison entre chaque position tridimensionnelle obtenue suite à l'étape 380. Il en résulte une liste de vecteurs de déplacements potentiels, dont les coordonnées représentent des déplacements potentiels. La figure 4B représente des déplacements potentiels obtenus suite à un deuxième essai expérimental décrit ci-après. Cette étape peut prendre en compte un critère de tri, basé sur un déplacement minimal, et donc un écartement minimal entre deux positions. Par ailleurs, le critère de tri peut également prendre en compte le fait que les particules se déplacent, dans une direction, selon un sens prédéterminé. Par exemple, selon l'axe X, on considère que $\Delta xmin \leq \Delta x \leq \Delta xmax$, avec $\Delta xmin > 0$. Cela prend en compte le fait que les positions tridimensionnelles de l'image acquise sont susceptibles de correspondre à des positions de particules au premier instant ou au deuxième instant.

Etape 410 : prise en compte d'un modèle de déplacement, de façon analogue à l'étape 210.

Etape 420 : validation de déplacements, sur la base d'un modèle de déplacement, comme décrit en lien avec l'étape 220. Sur la figure 4B, on a représenté un modèle de déplacement (courbe M3).

Etape 430 : définition des positions et/ou du nombre particules correspondant à des déplacements validés lors de l'étape 420.

Selon ce deuxième mode de réalisation, le procédé peut comporter une étape 450 d'ajustement du seuil de rapport signal sur bruit utilisé, de façon similaire à l'étape 250 précédemment décrite.

Un avantage de ce mode de réalisation est d'éviter le recours des capteurs d'images ayant une fréquence d'acquisition trop élevée. Par exemple, lorsque l'intervalle temporel entre le premier instant et le deuxième instant est de 5 ms, le premier mode de réalisation, basé sur une acquisition de deux images successives, imposerait une cadence d'acquisition de 200 images par secondes, ce qui n'est pas à la portée de capteurs d'images usuels. Ce mode de réalisation est donc adapté à des particules présentant des vitesses élevées.

Ce mode de réalisation a fait l'objet d'un deuxième essai expérimental, les particules étant des billes de polystyrène de diamètre 2 $\mu$m se déplaçant dans l'air. La figure 4B représente les déplacements ainsi qu'une bordure modélisée.

Une limitation de ce mode de réalisation est qu'il ne prend en compte que les particules présentes dans le champ d'observation du capteur d'image aux deux instants considérés. Les inventeurs ont estimé qu'en appliquant un facteur de pondération à chaque déplacement détecté, le nombre de particules compté est plus fiable. Le facteur de pondération pour chaque déplacement $\Delta_k$, est déterminé selon une approche probabiliste. La probabilité de détection $p_k$ de coordonnées $\Delta X_k$, $\Delta Y_k$ est telle que : $p_k = \frac{(LX-|\Delta X_k|)\times(LY-|\Delta Y_k|)}{LX\times LY}$ , où $LX$ et $LY$ désignent les dimensions du champ observé par le détecteur 20 dans la chambre fluidique 15, respectivement selon l'axe X et l'axe Y.

Si $K$ désigne le nombre de déplacements $\Delta_k$ validés, chaque déplacement ayant pour coordonnées $\Delta X_k$ et $\Delta Y_k$, le nombre de particules dans la chambre fluidique peut être estimé par :

$$N = \sum_{k=1}^{k=K} \frac{1}{p_k} = \sum_{k=1}^{k=K} \frac{LX\times LY}{(LX-|\Delta X_k|)\times(LY-|\Delta Y_k|)}$$

Cela ne reste valable que si $|\Delta X_k|$ < $LX$ ou si $|\Delta Y_k|$ < $LY$

On décrit à présent une variante pouvant être appliquée à chaque mode de réalisation, à partir de la liste des déplacements potentiels $\Delta$. Cette liste est obtenue à l'issue de l'étape 200 du premier mode de réalisation ou de l'étape 400 du deuxième mode de réalisation. Selon cette variante, les particules circulant dans la chambre fluidique sont de différents types, par exemple de masses différentes. De ce fait, chaque type de particule peut présenter un déplacement, dit déplacement particulaire, par rapport au fluide, qui lui est propre. Le déplacement particulaire peut être induit par une propriété de la particule, conditionnant le déplacement de cette dernière par rapport au fluide. La particule se déplace alors dans le fluide sous l'effet d'une force dépendant de ladite propriété, par exemple sous l'effet d'un champ auquel la particule est soumise. Il peut par exemple s'agir d'un champ électrique, ou magnétique, auquel cas une particule est soumise à une force dépendant de sa charge. Il peut également d'agir d'un champ gravitationnel, auquel cas la particule se déplace par rapport au fluide en fonction de sa masse. Ainsi, on peut définir un modèle de déplacement particulaire de particules par rapport au fluide, dont un paramètre est ladite propriété de la particule. Le déplacement particulaire de chaque particule est de préférence orienté selon une orientation non parallèle à la direction d'écoulement du fluide, mais cette condition n'est pas nécessaire. Il est optimal que le déplacement particulaire soit perpendiculaire à la direction d'écoulement du fluide. En appliquant le modèle de déplacement particulaire aux déplacements tridimensionnels préalablement validés $\Delta$, on peut déterminer la propriété de la particule formant un paramètre du modèle de déplacement particulaire. Il est ensuite possible de classer les particules en fonction de leur propriété et de compter les particules en fonction d'une valeur de ladite propriété.

On peut par exemple prendre en compte un modèle de déplacement particulaire correspondant à une valeur prédéterminée de la propriété. Puis on détermine, pour chaque particule, un écart $\varepsilon$ par rapport à ce modèle. On peut alors classifier les particules selon l'écart $\varepsilon$, par rapport au modèle de déplacement particulaire, qui leur a été attribué. Les particules sont alors classifiées en fonction de leur déplacement particulaire. Les particules pour lesquelles l'écart est nul ont une propriété correspondant à la valeur prédéterminée. La propriété des autres particules dépend de l'écart calculé pour chacune d'entre elle.

Un troisième essai expérimental a été réalisé pour mettre en oeuvre cette variante, en utilisant des billes de polystyrènes de diamètre 1µm et de diamètre 2pm. La chambre fluidique a été maintenue disposée de telle sorte que les particules ont été entraînées par de l'air circulant horizontalement, l'axe d'écoulement X étant horizontal. Le dispositif expérimental est représenté sur la figure 1A, le plan XZ étant un plan horizontal. Les particules ont été entraînées horizontalement par le fluide porteur, en l'occurrence l'air, selon l'axe horizontal X. Elles ont subi l'effet de la gravité, selon un axe vertical Y, perpendiculaire à l'axe d'écoulement. Les dimensions de la chambre fluidique 15 étaient de 10 mm et de 20 mm respectivement selon les axes Z et Y. La chambre fluidique présentait, dans un plan YZ, une section rectangulaire de dimensions 9.6 mm x 20 mm.

On peut montrer que si $\Delta t = t_2 - t_1$, une variation du déplacement $\Delta Y$ selon l'axe Y, est telle que:

$$\Delta Y = K(\rho_b d_b^2 - \rho_a d_a^2)\Delta t$$ , avec :

- $\rho_b$ : densité du deuxième type de particules;
- $d_b$ : diamètre du deuxième type de particules;
- $\rho_a$ : densité du premier type de particules ;
- $d_a$ : diamètre du premier type de particules;
- K est une constante, égale à 34.7.

Dans cet exemple, la propriété de chaque particule considérée est le diamètre aérodynamique, correspondant au produit du diamètre d'une particule par la racine carrée de sa densité.

Pour une fréquence d'acquisition de 10 Hz ou de 4Hz, $\Delta Y$ est respectivement égal à 12.4 et 31 µm, soit 5.6 et 14.1 pixels, pour le premier type et le deuxième type de particules.

Sur chaque image reconstruite, les particules de diamètre 2µm apparaissent plus nettement que les particules

de diamètre 1μm : ainsi, le rapport signal à bruit correspondant aux particules de diamètre élevé est plus important que le rapport signal à bruit correspondant aux particules de faible diamètre.

Lors de l'établissement des déplacements potentiels Δ (étape 200), un déplacement est considéré comme potentiel lorsque le rapport signal à bruit associé aux deux positions, définissant le déplacement, est voisin. On peut alors affecter un rapport signal sur bruit $S_\Delta$ à chaque déplacement Δ, ce rapport étant obtenu par une moyenne des rapports signal à bruit respectivement associés à chaque position formant le déplacement. Le rapport signal sur bruit $S_\Delta$ des déplacements du premier type de particule (particules de diamètre 1μm) est inférieur au rapport signal à bruit des déplacements du deuxième type de particules (particules de diamètre 2 μm). Par ailleurs, le déplacement, selon l'axe vertical Y, du premier type de particules est inférieur au déplacement, selon le même axe, du deuxième type de particules.

On a soustrait, à chaque déplacement ΔY déterminé selon l'axe Y, le déplacement particulaire modélisé pour le deuxième type de particules.

La figure 5 représente les déplacements ΔY de chaque particule après la soustraction du modèle de déplacement particulaire, en fonction du rapport signal à bruit attribué chaque déplacement. La fréquence d'acquisition est de 10 Hz. Chaque point de la figure 5 représente un déplacement validé. On observe une segmentation des déplacements :

- les déplacements correspondant au deuxième type de particules sont regroupés selon un groupe Ga, centré sur la coordonnée ΔY = 0.
- les déplacements correspondant au premier type de particules sont regroupés selon un groupe Gb, s'étendant autour de la coordonnée ΔY = 12.5 μm.

On observe également que les déplacements associés au premier type de particule ont un rapport signal sur bruit $S_\Delta$ inférieur aux déplacements associés au deuxième type de particules.

Cette variante permet dénombrer des particules en fonction d'une propriété, de type masse, charge, diamètre aérodynamique. Elle peut également être mise en oeuvre pour discriminer des bactéries suivant leur motilité. On peut alors discriminer des bactéries de type Staphylocoques (non motiles qui suivent le fluide) de bactéries de types *Escherichia coli* (motiles, qui se déplacent par rapport au fluide).

Dans les modes de réalisation décrits ci-dessus, les images sont acquises par un capteur d'image 20 placé selon une configuration d'imagerie sans lentille, aucune optique de formation d'image n'étant disposée entre le capteur d'image et la chambre fluidique. En effet, un tel dispositif permet une détermination de positions tridimensionnelles de particules à l'aide d'un capteur d'image bidimensionnel, en mettant en oeuvre une instrumentation peu coûteuse. Un tel dispositif est donc particulièrement adapté à la mise en oeuvre de l'invention. Mais l'invention s'applique à d'autres configurations d'imagerie permettant d'obtenir des positions de particules à deux instants successifs, et en particulier des positions tridimensionnelles. Les modes de réalisation décrits ci-dessus s'appliquent à un capteur d'image défocalisé, formant une image défocalisée de l'échantillon, selon le principe connu des microscopes holographiques numériques. L'avantage est de pouvoir observer des particules de plus petite taille, au détriment d'un champ d'observation réduit. Il est également possible d'obtenir les positions tridimensionnelles de particules par d'autres modalités d'imagerie, mettant en oeuvre plusieurs capteurs d'image. Ces capteurs peuvent par exemple s'étendre parallèlement l'un à l'autre, la position tridimensionnelle des particules étant obtenue par stéréovision. Deux capteurs s'étendant selon des plans différents, par exemple perpendiculairement l'un à l'autre, sont également envisageables.

L'invention pourra s'appliquer à la détection de particules solides dans l'air, par exemple des polluants ou des poussières, mais également à la détection de particules, notamment des particules biologiques, dans un liquide. Elle trouvera des applications dans les applications liées au contrôle de fluides, pour l'industrie, l'environnement, la santé ou l'agro-alimentaire.

**Revendications**

1. Procédé de dénombrement de particules (10a) en mouvement, les particules étant portées par un fluide (10b), le fluide circulant dans une chambre fluidique (15), les particules étant entraînées par le mouvement du fluide, le procédé comportant les étapes suivantes :

   a) disposition de la chambre fluidique (15) entre une source de lumière (11) et un capteur d'image (20), le capteur d'image s'étendant selon un plan de détection ($P_0$);
   b) illumination de la chambre fluidique par la source de lumière, la source de lumière émettant une onde lumineuse incidente (12) se propageant selon un axe de propagation (Z), et acquisition, par le capteur d'image (20), d'une première image ($I,I(t_1)$), représentative d'une onde d'exposition (14) à laquelle est exposé le capteur d'image (20), le capteur d'image comportant différents pixels, à chaque pixel étant associé une coordonnée radiale ($x$, $y$) dans le plan de détection ($P_0$);

c) à partir de la première image acquise, obtention de coordonnées tridimensionnelles (($x$, $y$, $z$)($t_1$)) de particules, dans la chambre fluidique, à un premier instant ($t_1$),

d) obtention de coordonnées tridimensionnelles (($x$, $y$, $z$)($t_2$)) de particules dans la chambre fluidique à un deuxième instant ($t_2$), postérieur au premier instant ;

e) à partir des coordonnées des particules obtenues au premier instant et au deuxième instant, détermination de déplacements potentiels ($\Delta$) des particules entre lesdits instants;

**caractérisé en ce que** le procédé comporte aussi les étapes suivantes :

f) prise en compte d'un modèle de déplacement (*mod*) du fluide dans la chambre fluidique;

g) à partir du modèle de déplacement du fluide considéré lors de l'étape f), validation de déplacements parmi les déplacements ($\Delta$) potentiels calculés lors de l'étape e) ;

h) à partir des déplacements validés ($\Delta_v$) lors de l'étape g), détermination d'un nombre (N) de particules et/ou des coordonnées des particules au premier instant et/ou au deuxième instant.

2. Procédé selon la revendication 1, dans lequel l'étape c) comporte :

- l'obtention d'une première image d'intérêt ($I_v(t_1)$) à partir de la première image acquise ($I, I(t_1)$) lors de l'étape b), et l'application d'un opérateur de propagation numérique (h) à la première image d'intérêt, selon au moins une distance de reconstruction ($z_j$), le long de l'axe de propagation, de façon à obtenir au moins une image complexe reconstruite ($Az_j$);

- à partir de chaque image complexe reconstruite ($Az_j$), l'obtention de coordonnées radiales (x,y) de particules dans la chambre fluidique au premier instant.

3. Procédé selon la revendication 1 ou la revendication 2 dans lequel les particules occupent différentes coordonnées transversales selon l'axe de propagation Z, et dans lequel l'étape c) comporte les sous-étapes suivantes:

ci) obtention d'une première image d'intérêt ($I_v(t_1)$) à partir de la première image acquise ($I$, $I(t_1)$) lors de l'étape b), et application d'un opérateur de propagation numérique (*h*) à la première image d'intérêt selon une pluralité de distances de reconstruction ($z_j$), le long de l'axe de propagation (Z), de façon à obtenir une première pile d'images complexes reconstruites, dite première pile d'images, comportant autant d'images complexes reconstruites ($Az_j$) que de distances de reconstruction, chaque image complexe reconstruite ($Az_j$) étant représentative d'une onde lumineuse d'exposition (14) à laquelle est exposé le capteur d'image (20) ;

cii) pour au moins une coordonnée radiale (x,y) définie sur la première image d'intérêt, détermination d'une distance de reconstruction ($z_{x,y}$) maximisant l'évolution d'une composante (*comp* ($A_{z_j}(x, y), -Re(A_{z_j}(x, y))$) de chaque image complexe ($Az_j$) formant la première pile d'images, le long d'un axe parallèle à l'axe de propagation et passant par ladite coordonnée radiale, ladite distance de reconstruction ainsi déterminée ($z_{x,y}$) formant une coordonnée transversale associée à ladite coordonnée radiale, la valeur de la composante calculée à ladite distance de reconstruction étant une valeur dite maximale $A_{max}(x, y)$ associée à ladite coordonnée radiale ($x$, $y$), la sous-étape cii) étant réalisée pour tout ou partie de coordonnées radiales associées aux pixels de la première image d'intérêt ;

ciii) établissement d'une liste de positions tridimensionnelles, chaque position tridimensionnelle comportant une coordonnée radiale (x,y) ainsi que la coordonnée transversale ($z_{x,y}$) associée, déterminée lors de la sous-étape cii), à chaque position tridimensionnelle étant associée la valeur maximale ($A_{max}(x,y)$) obtenue lors de la sous-étape cii) ;

civ) sélection de positions tridimensionnelles ($x$, $y$, $z_{x,y}$) en fonction de la valeur maximale ($A_{max}(x, y)$) qui leur est associée ;

le procédé étant tel que lors de l'étape cii), la composante (*comp* ($A_{z_j}(x, y)$)) considérée comporte la partie réelle, ou la partie imaginaire, ou le module, ou la phase de chaque image complexe ($Az_j$) formant la pile d'images.

4. Procédé selon la revendication 2 ou la revendication 3, dans lequel la première image d'intérêt ($I_v(t_1)$) est :

- la première image ($I(t_1)$) acquise lors de l'étape b) ;

- ou la première image ($I(t_1)$) acquise lors de l'étape b), à laquelle est soustraite une image de la chambre fluidique, acquise par le capteur d'image, antérieurement ou postérieurement à l'acquisition de la première image, la soustraction étant pondérée par un terme de pondération ;

- ou la première image acquise ( $I(t_1)$) lors de l'étape b), à laquelle est soustraite une moyenne d'images acquises respectivement antérieurement et postérieurement à l'acquisition de la première image.

**5.** Procédé selon l'une quelconque des revendications 3 à 4, dans lequel la sous-étape civ) comporte:

- une formation d'une image $(A_{max})$, dite première image des maximas, dont chaque pixel est associé à une position tridimensionnelle ($x$, $y$, $z_{x,y}$) déterminé lors de la sous-étape ciii), et est affecté de la valeur maximale $(A_{max}(x, y))$ déterminée, lors de la sous-étape ciii), pour ladite position tridimensionnelle ;
- une sélection, dans la première image des maximas, de pixels ($x_{max}$, $y_{max}$)dont la valeur $(A_{max}(x, y))$ est maximale dans une zone de voisinage définie autour de chaque pixel ;
- un calcul, pour chaque pixel sélectionné, d'un rapport signal sur bruit $(SNR(x_{max}, y_{max}))$ en fonction de ladite valeur maximale $(A_{max}(x,y))$ et de la valeur de pixels de la première image des maximas $(A_{max})$ situés dans une zone de calcul s'étendant autour dudit pixel ;

de telle sorte que chaque position tridimensionnelle est sélectionnée en fonction du rapport signal à bruit calculé pour le pixel de la première image des maximas qui lui est associé.

**6.** Procédé selon l'une quelconque des revendications précédentes, dans lequel l'étape d) comporte une acquisition, par le capteur d'image (20), d'une deuxième image ($I(t_2)$), dont chaque pixel est associé à une coordonnée radiale ($x$, $y$) dans le plan de détection ($P_0$).

**7.** Procédé selon la revendication 6, dans lequel l'étape d) comporte les sous-étapes suivantes :

di) obtention d'une deuxième image d'intérêt ($I_v(t_2)$) à partir de la deuxième image acquise ($I(t_2)$) et application d'un opérateur de propagation numérique $(h)$ à la deuxième image d'intérêt, selon une pluralité de distances de reconstruction, le long de l'axe de propagation (Z), de façon à obtenir une deuxième pile d'images complexes reconstruites $(Az_j)$, dite deuxième pile d'images, comportant autant d'images complexes reconstruites que de distances de reconstruction ($z_j$), chaque image complexe reconstruite étant représentative d'une onde lumineuse d'exposition (14) à laquelle est exposé le capteur d'image (20) au deuxième instant ;
dii) pour au moins une coordonnée radiale (x,y) définie sur la deuxième image d'intérêt, détermination d'une distance de reconstruction $(z_{xy})$ maximisant l'évolution d'une composante de chaque image complexe formant la deuxième pile d'images, le long d'un axe parallèle à l'axe de propagation et passant par ladite coordonnée radiale, ladite distance de reconstruction formant une coordonnée transversale associée à ladite coordonnée radiale, la valeur de la composante calculée à ladite distance de reconstruction étant une valeur dite maximale associée à ladite coordonnée radiale, la sous étape dii) étant réalisée pour tout ou partie de coordonnées radiales associées aux pixels de la deuxième image d'intérêt ;
diii) établissement d'une liste de positions tridimensionnelles, chaque position tridimensionnelle comportant une coordonnée radiale (x,y) ainsi que la coordonnée transversale associée, déterminée lors de la sous-étape dii), à chaque position tridimensionnelle étant associée la valeur maximale obtenue lors de la sous-étape dii) ;
div) sélection de positions tridimensionnelles en fonction de la valeur maximale qui leur est associée;

le procédé étant tel que lors de l'étape dii), la composante considérée comporte la partie réelle, ou la partie imaginaire, ou le module, ou la phase de chaque image complexe $(Az_j)$ formant la pile d'images.

**8.** Procédé selon la revendication 7, dans lequel lors de la sous-étape étape di) la deuxième image d'intérêt $(I_v(t_2))$ est :

- la deuxième image acquise ($I(t_2)$) ;
- ou la deuxième image acquise ( $I(t_2)$), à laquelle est soustraite une image de la chambre fluidique, acquise par le capteur d'image, antérieurement ou postérieurement à l'acquisition de la deuxième image, la soustraction étant pondérée par un terme de pondération, pouvant être compris entre 0 et 1;
- ou la deuxième image acquise ( $I(t_2)$), à laquelle est soustraite une moyenne d'images acquises respectivement antérieurement et postérieurement à l'acquisition de la deuxième image.

**9.** Procédé selon la revendication 7 ou la revendication 8, dans lequel la sous-étape div) comporte:

- une formation d'une image $(A_{max})$, dite deuxième image des maximas, dont chaque pixel est associé à une position tridimensionnelle ($x$, $y$, $z_{xy}$) déterminé lors de la sous-étape diii), et est affecté de la valeur maximale $(A_{max}(x,y))$ déterminée, lors de la sous-étape diii), pour ladite position tridimensionnelle ;

- une sélection, dans la deuxième image des maximas, de pixels $(x_{max}, y_{max})$ dont la valeur $(A_{max}(x, y))$ est maximale dans une zone de voisinage définie autour de chaque pixel ;
- un calcul, pour chaque pixel sélectionné, d'un rapport signal sur bruit $(SNR(x_{max}, y_{max}))$ en fonction de ladite valeur maximale $(A_{max}(x, y))$ et de la valeur de pixels de la deuxième image des maximas $(A_{max})$ situés dans une zone de calcul s'étendant autour dudit pixel ;

de telle sorte que chaque position tridimensionnelle est sélectionnée en fonction du rapport signal à bruit calculé pour le pixel de la deuxième image des maximas qui lui est associé.

**10.** Procédé selon l'une quelconque des revendications 1 à 5, dans lequel :

- l'étape b) comporte deux illuminations successives de la chambre fluidique par la source de lumière, au premier instant et au deuxième instant, de telle sorte que la première image (I) représente l'onde d'exposition (14) à chacun des instants ;
- les étapes c) et d) sont confondues en une même étape d'obtention des coordonnées de particules au premier instant et au deuxième instant.

**11.** Procédé selon l'une quelconque des revendications précédentes, dans lequel l'étape g) comporte une détermination d'une plage de déplacements à l'aide du modèle de déplacement pris en compte lors de l'étape f), les déplacements potentiels étant validés lorsqu'ils sont compris dans ladite plage de déplacement.

**12.** Procédé selon l'une quelconque des revendications précédentes, dans lequel :

- le fluide comporte des particules, chaque particule présentant une propriété et se déplaçant, par rapport au fluide, selon un modèle de déplacement, dit modèle de déplacement particulaire ;
- le modèle de déplacement particulaire dépend de ladite propriété des particules ;

le procédé comportant, à partir de déplacements validés lors de l'étape g), une étape i) de prise en compte d'au moins un modèle de déplacement particulaire, de façon à compter les particules en fonction d'une valeur de ladite propriété.

**13.** Procédé selon la revendication 12, dans lequel la propriété est une masse ou une charge électrique, ou une aptitude à se déplacer dans le fluide.

**14.** Procédé selon l'une quelconque des revendications 12 ou 13, comportant :

- une prise en compte d'un modèle de déplacement particulaire pour une valeur prédéterminée de la propriété ;
- un calcul d'écarts des déplacements de chaque particule par rapport audit modèle de déplacement particulaire ;

de telle sorte que la propriété de chaque particule est déterminée en fonction desdits écarts ainsi que de ladite valeur prédéterminée de la propriété.

**15.** Dispositif pour le comptage de particules circulant dans une chambre fluidique, le dispositif comportant :

- une source de lumière (11) configurée pour illuminer la chambre fluidique (15) ;
- un capteur d'image (20) s'étendant dans un plan de détection ($P_0$), la chambre fluidique étant interposée entre le capteur d'image et la source de lumière, le capteur d'image étant configuré pour acquérir au moins une image de la chambre fluidique illuminée par la source de lumière ;
- le dispositif comportant un processeur (30) apte à mettre en oeuvre les étapes c) à h) d'un procédé selon l'une quelconque des revendications 1 à 14 à partir d'au moins une image acquise par le capteur d'image.

**Patentansprüche**

**1.** Verfahren zum Zählen von in Bewegung befindlichen Partikeln (10a), wobei die Partikel von einem Fluid (10b) getragen werden, wobei das Fluid in einer Fluidkammer (15) fließt, wobei die Partikel von der Bewegung des Fluids angetrieben werden, wobei das Verfahren die folgenden Schritte aufweist:

a) Anordnung der Fluidkammer (15) zwischen einer Lichtquelle (11) und einem Bildsensor (20), wobei der Bildsensor sich gemäß einer Erkennungsebene ($P_0$) erstreckt;

b) Beleuchtung der Fluidkammer durch die Lichtquelle, wobei die Lichtquelle eine einfallende Lichtwelle (12) emittiert, die sich gemäß einer Ausbreitungsachse (Z) ausbreitet, und Erfassung, durch den Bildsensor (20), eines ersten Bilds ($I,I(t_1)$), das für eine Belichtungswelle (14) repräsentativ ist, der der Bildsensor (20) ausgesetzt ist, wobei der Bildsensor verschiedene Pixel aufweist, wobei jedem Pixel eine radiale Koordinate (x,y) in der Erkennungsebene (P0) zugeordnet ist;

c) ausgehend vom ersten erfassten Bild, Erhalt von dreidimensionalen Koordinaten ($(x,y,z)(t_1)$) von Partikeln in der Fluidkammer zu einem ersten Zeitpunkt ($t_1$),

d) Erhalt von dreidimensionalen Koordinaten ($(x,y,z)(t_2)$) von Partikeln in der Fluidkammer zu einem zweiten Zeitpunkt ($t_2$) nach dem ersten Zeitpunkt;

e) ausgehend von den zum ersten Zeitpunkt und zum zweiten Zeitpunkt erhaltenen Koordinaten der Partikel, Bestimmung von möglichen Verschiebungen () der Partikel zwischen den Zeitpunkten;

**dadurch gekennzeichnet, dass** das Verfahren auch die folgenden Schritte aufweist:

f) Berücksichtigung eines Verschiebungsmodells (mod) des Fluids in der Fluidkammer;

g) ausgehend von dem im Schritt f) berücksichtigten Verschiebungsmodell des Fluids, Validierung von Verschiebungen unter den im Schritt e) berechneten möglichen Verschiebungen ();

h) ausgehend von den im Schritt g) validierten Verschiebungen ($_v$), Bestimmung einer Anzahl (N) von Partikeln und/oder der Koordinaten der Partikel zum ersten Zeitpunkt und/oder zum zweiten Zeitpunkt.

2. Verfahren nach Anspruch 1, wobei der Schritt c) aufweist:

- den Erhalt eines ersten interessierenden Bilds ($I_v(t_1)$) ausgehend vom im Schritt b) erfassten ersten Bild ($I,I(t_1)$), und die Anwendung eines digitalen Ausbreitungsoperators (h) an das erste interessierende Bild, gemäß mindestens einem Rekonstruktionsabstand ($z_j$), entlang der Ausbreitungsachse, um mindestens ein rekonstruiertes komplexes Bild ($Az_j$) zu erhalten;

- ausgehend von jedem rekonstruierten komplexen Bild *(Az_j),* den Erhalt von radialen Koordinaten (x,y) von Partikeln in der Fluidkammer zum ersten Zeitpunkt.

3. Verfahren nach Anspruch 1 oder Anspruch 2, wobei die Partikel verschiedene Querkoordinaten gemäß der Ausbreitungsachse Z besetzen, und wobei der Schritt c) die folgenden Teilschritte aufweist:

ci) Erhalt eines ersten interessierenden Bilds ($I_v(t_1)$) ausgehend vom im Schritt b) erfassten ersten Bild ($I,I(t_1)$), und Anwendung eines digitalen Ausbreitungsoperators (h) an das erste interessierende Bild gemäß einer Vielzahl von Rekonstruktionsabständen ($z_j$) entlang der Ausbreitungsachse (Z), um einen ersten Stapel rekonstruierter komplexer Bilder, erster Bilderstapel genannt, zu erhalten, der so viele rekonstruierte komplexe Bilder *(Az_j)* wie Rekonstruktionsabstände aufweist, wobei jedes rekonstruierte komplexe Bild *(Az_j)* für eine Belichtungs-Lichtwelle (14) repräsentativ ist, der der Bildsensor (20) ausgesetzt ist;

cii) für mindestens eine auf dem ersten interessierenden Bild definierte radiale Koordinate (x,y), Bestimmung eines Rekonstruktionsabstands ($z_{x,y}$), der die Entwicklung einer Komponente jedes den ersten Bilderstapel formenden komplexen Bilds *(Az_j)* entlang einer Achse parallel zur Ausbreitungsachse und durch die radiale Koordinate verlaufend maximiert, wobei der so bestimmte Rekonstruktionsabstand ($z_{x,y}$) eine der radialen Koordinate zugeordnete Querkoordinate formt, wobei der Wert der berechneten Komponente im Rekonstruktionsabstand ein der radialen Koordinate (x,y) zugeordneter so genannter maximaler Wert $A_{max}(x,y)$ ist, wobei der Teilschritt cii) für alle oder einen Teil von den Pixeln des ersten interessierenden Bilds zugeordneten radialen Koordinaten durchgeführt wird;

ciii) Erstellung einer Liste dreidimensionaler Positionen, wobei jede dreidimensionale Position eine radiale Koordinate (x,y) sowie die im Teilschritt cii) bestimmte zugeordnete Querkoordinate ($z_{x,y}$) aufweist, wobei jeder dreidimensionalen Position der im Teilschritt cii) erhaltene maximale Wert ($A_{max}(x,y)$) zugeordnet ist;

civ) Auswahl von dreidimensionalen Positionen ($x,y,z_{x,y}$) abhängig vom ihnen zugeordneten maximalen Wert ($A_{max}(x,y)$);

wobei das Verfahren so ist, dass im Schritt cii) die betrachtete Komponente den realen Teil oder den imaginären Teil oder das Modul oder die Phase jedes den Bilderstapel formenden komplexen Bilds ($Az_j$) aufweist.

4. Verfahren nach Anspruch 2 oder Anspruch 3, wobei das erste interessierende Bild ($I_v(t_1)$) ist:

- das im Schritt b) erfasste erste Bild ($I(t_1)$);
- oder das im Schritt b) erfasste erste Bild ($I(t_1)$), von dem ein Bild der Fluidkammer subtrahiert wird, das vom Bildsensor vor oder nach der Erfassung des ersten Bilds erfasst wird, wobei die Subtraktion durch einen Gewichtungsterm gewichtet wird;
- oder das im Schritt b) erfasste erste Bild ($I(t_1)$), von dem ein Mittelwert von vor bzw. nach der Erfassung des ersten Bilds erfassten Bildern subtrahiert wird.

5. Verfahren nach einem der Ansprüche 3 bis 4, wobei der Teilschritt civ) aufweist:

- eine Formung eines Bilds ($A_{max}$), erstes Bild der Maxima genannt, von dem jedes Pixel einer im Teilschritt ciii) bestimmten dreidimensionalen Position ($x,y,z_{x,y}$) zugeordnet ist, und vom im Teilschritt ciii) bestimmten maximalen Wert ($A_{max}(x,y)$) für die dreidimensionale Position betroffen ist;
- eine Auswahl, im ersten Bild der Maxima, von Pixeln ($x_{max},y_{max}$), deren Wert ($A_{max}(x,y)$) in einer um jedes Pixel herum definierten Nachbarschaftszone maximal ist;
- eine Berechnung, für jedes ausgewählte Pixel, eines Signal/Rausch-Verhältnisses ($SNR(x_{max},y_{max})$) abhängig vom maximalen Wert ($A_{max}(x,y)$) und vom Wert von Pixeln des ersten Bilds der Maxima ($A_{max}$), die sich in einer Berechnungszone befinden, die sich um das Pixel herum erstreckt;

so dass jede dreidimensionale Position abhängig vom Signal/RauschVerhältnis ausgewählt wird, das für das Pixel des ersten Bilds der Maxima berechnet wird, das ihr zugeordnet ist.

6. Verfahren nach einem der vorhergehenden Ansprüche, wobei der Schritt d) eine Erfassung eines zweiten Bilds ($I(t_2)$) durch den Bildsensor (20) aufweist, von dem jedes Pixel einer radialen Koordinate ($x,y$) in der Erkennungsebene ($P_0$) zugeordnet ist.

7. Verfahren nach Anspruch 6, wobei der Schritt d) die folgenden Teilschritte aufweist:

di) Erhalt eines zweiten interessierenden Bilds ($I_v(t_2)$) ausgehend vom erfassten zweiten Bild ($I(t_2)$) und Anwendung eines digitalen Ausbreitungsoperators (h) an das zweite interessierende Bild gemäß einer Vielzahl von Rekonstruktionsabständen entlang der Ausbreitungsachse (Z), um einen zweiten Stapel rekonstruierter komplexer Bilder ($Az_j$) zu erhalten, zweiter Bilderstapel genannt, der so viele rekonstruierte komplexe Bilder wie Rekonstruktionsabstände ($z_j$) aufweist, wobei jedes rekonstruierte komplexe Bild für eine Belichtungs-Lichtwelle (14) repräsentativ ist, der der Bildsensor (20) zum zweiten Zeitpunkt ausgesetzt ist;
dii) für mindestens eine im zweiten interessierenden Bild definierte radiale Koordinate ($x,y$), Bestimmung eines Rekonstruktionsabstands ($z_{xy}$), der die Entwicklung einer Komponente jedes den zweiten Bilderstapel formenden komplexen Bilds entlang einer Achse parallel zur Ausbreitungsachse und durch die radiale Koordinate verlaufend maximiert, wobei der Rekonstruktionsabstand eine der radialen Koordinate zugeordnete Querkoordinate formt, wobei der im Rekonstruktionsabstand berechnete Wert der Komponente ein der radialen Koordinate zugeordneter sogenannter maximaler Wert ist, wobei der Teilschritt dii) für alle oder einen Teil von den Pixeln des zweiten interessierenden Bilds zugeordneten radialen Koordinaten durchgeführt wird;
diii) Erstellung einer Liste dreidimensionaler Positionen, wobei jede dreidimensionale Position eine radiale Koordinate ($x,y$) sowie die im Teilschritt dii) bestimmte zugeordnete Querkoordinate aufweist, wobei jeder dreidimensionalen Position der im Teilschritt dii) erhaltene maximale Wert zugeordnet ist;
div) Auswahl von dreidimensionalen Positionen abhängig vom maximalen Wert, der ihnen zugeordnet ist;

wobei das Verfahren so ist, dass im Schritt dii) die betrachtete Komponente den realen Teil oder den imaginären Teil oder das Modul oder die Phase jedes den Bilderstapel formenden komplexen Bilds ($Az_j$) aufweist.

8. Verfahren nach Anspruch 7, wobei im Teilschritt Schritt di) das zweite interessierende Bild ($I_v(t_2)$) ist:

- das zweite erfasste Bild ($I(t_2)$);
- oder das zweite erfasste Bild ($I(t_2)$), von dem ein Bild der Fluidkammer subtrahiert wird, das vom Bildsensor vor oder nach der Erfassung des zweiten Bilds erfasst wird, wobei die Subtraktion durch einen Gewichtungsterm gewichtet wird, der zwischen 0 und 1 liegen kann;
- oder das erfasste zweite Bild ($I(t_2)$), von dem ein Mittelwert von vor bzw. nach der Erfassung des zweiten Bilds erfassten Bildern subtrahiert wird.

9. Verfahren nach Anspruch 7 oder Anspruch 8, wobei der Teilschritt div) aufweist:

- ein Formen eines Bilds ($A_{max}$), zweites Bild der Maxima genannt, von dem jedes Pixel einer im Teilschritt diii) bestimmten dreidimensionalen Position ($x,y,z_{x,y}$) zugeordnet ist, und vom im Teilschritt diii) bestimmten maximalen Wert ($A_{max}(x,y)$) für die dreidimensionale Position betroffen ist;

- eine Auswahl, im zweiten Bild der Maxima, von Pixeln ($x_{max},y_{max}$), deren Wert ($A_{max}(x,y)$) in einer um jedes Pixel herum definierten Nachbarschaftszone maximal ist;

- eine Berechnung, für jedes ausgewählte Pixel, eines Signal/Rausch-Verhältnisses ($SNR(x_{max},y_{max})$) abhängig vom maximalen Wert ($A_{max}(x,y)$) und vom Wert von Pixeln des zweiten Bilds der Maxima ($A_{max}$), die sich in einer sich um das Pixel herum erstreckenden Berechnungszone befinden;

so dass jede dreidimensionale Position abhängig vom Signal/RauschVerhältnis ausgewählt wird, das für das Pixel des zweiten Bilds der Maxima berechnet wird, das ihr zugeordnet ist.

10. Verfahren nach einem der Ansprüche 1 bis 5, wobei:

- der Schritt b) zwei aufeinanderfolgende Beleuchtungen der Fluidkammer durch die Lichtquelle zum ersten Zeitpunkt und zum zweiten Zeitpunkt aufweist, so dass das erste Bild (I) die Belichtungswelle (14) zu jedem der Zeitpunkte darstellt;
- die Schritte c) und d) in einem gleichen Schritt des Erhalts der Koordinaten von Partikeln zum ersten Zeitpunkt und zum zweiten Zeitpunkt zusammenfallen.

11. Verfahren nach einem der vorhergehenden Ansprüche, wobei der Schritt g) eine Bestimmung eines Bereichs von Verschiebungen mit Hilfe des im Schritt f) berücksichtigten Verschiebungsmodells aufweist, wobei die möglichen Verschiebungen validiert werden, wenn sie im Verschiebungsbereich liegen.

12. Verfahren nach einem der vorhergehenden Ansprüche, wobei:

- das Fluid Partikel aufweist, wobei jedes Partikel eine Eigenschaft hat und sich bezüglich des Fluids gemäß einem Verschiebungsmodell bewegt, Partikel-Verschiebungsmodell genannt;
- das Partikel-Verschiebungsmodell von der Eigenschaft der Partikel abhängt;

wobei das Verfahren ausgehend von im Schritt g) validierten Verschiebungen einen Schritt i) der Berücksichtigung mindestens eines Partikel-Verschiebungsmodells aufweist, um die Partikel abhängig von einem Wert der Eigenschaft zu zählen.

13. Verfahren nach Anspruch 12, wobei die Eigenschaft eine Masse oder eine elektrische Ladung oder eine Fähigkeit ist, sich im Fluid zu verschieben.

14. Verfahren nach einem der Ansprüche 12 oder 13, das aufweist:

- eine Berücksichtigung eines Partikel-Verschiebungsmodells für einen vorbestimmten Wert der Eigenschaft;
- eine Berechnung von Abweichungen der Verschiebungen jedes Partikels bezüglich des Partikel-Verschiebungsmodells;

so dass die Eigenschaft jedes Partikels abhängig von den Abweichungen sowie vom vorbestimmten Wert der Eigenschaft bestimmt wird.

15. Vorrichtung zum Zählen von Partikeln, die in einer Fluidkammer fließen, wobei die Vorrichtung aufweist:

- eine Lichtquelle (11), die konfiguriert ist, die Fluidkammer (15) zu beleuchten;
- einen Bildsensor (20), der sich in einer Erkennungsebene ($P_0$) erstreckt, wobei die Fluidkammer zwischen den Bildsensor und die Lichtquelle eingefügt ist, wobei der Bildsensor konfiguriert ist, mindestens ein Bild der von der Lichtquelle beleuchteten Fluidkammer zu erfassen;
- wobei die Vorrichtung einen Prozessor (30) aufweist, der fähig ist, die Schritte c) bis h) eines Verfahrens nach einem der Ansprüche 1 bis 14 ausgehend von mindestens einem vom Bildsensor erfassten Bild durchzuführen.

**Claims**

1. Method for counting moving particles (10a), the particles being borne by a fluid (10b), the fluid flowing through a fluidic chamber (15), the particles being entrained by the movement of the fluid, the method comprising the following steps:

   a) placing the fluidic chamber (15) between a light source (11) and an image sensor (20), the image sensor lying in a detection plane ($P_0$);
   b) illuminating the fluidic chamber with the light source, the light source emitting an incident light wave (12) that propagates along a propagation axis (Z), and acquiring, with the image sensor (20), a first image ($I, I(t_1)$) representative of an exposure wave (14) to which the image sensor (20) is exposed, the image sensor comprising various pixels, each pixel being associated with a radial coordinate (x,y) in the detection plane ($P_0$);
   c) on the basis of the acquired first image, obtaining three-dimensional coordinates $((x,y,z)(t_1))$ of particles, in the fluidic chamber, at a first time ($t_1$);
   d) obtaining three-dimensional coordinates $((x, y, z)(t_2))$ of particles in the fluidic chamber at a second time ($t_2$), subsequent to the first time;
   e) on the basis of the coordinates of the particles obtained at the first time and at the second time, determining potential movements ($\Delta$) of the particles between said times;

   **characterized in that** the method also comprises the following steps:

   f) taking into account a model (*mod*) of the movement of the fluid in the fluidic chamber;
   g) on the basis of the model of the movement of the fluid considered in step f), validating movements among the potential movements ($\Delta$) calculated in step e);
   h) on the basis of the movements ($\Delta_v$) validated in step g), determining a number ($N$) of particles and/or coordinates of the particles at the first time and/or at the second time.

2. Method according to Claim 1, wherein step c) comprises:

   - obtaining a first image of interest ($I_v(t_1)$) from the first image ($I, I(t_1)$) acquired in step b) and applying a digital propagation operator ($h$) to the first image of interest in order to propagate it, by at least one reconstruction distance ($z_j$), along the propagation axis, so as to obtain at least one reconstructed complex image $(Az_j$ Y,
   - on the basis of each reconstructed complex image $(Az_j)$, obtaining radial coordinates ($x,y$) of particles in the fluidic chamber at the first time.

3. Method according to Claim 1 or Claim 2, wherein the particles occupy various transverse coordinates along the propagation axis Z, and wherein step c) comprises the following substeps:

   ci) obtaining a first image of interest ($I_v(t_1)$) from the first image ($I, I(t_1)$) acquired in step b), and applying a digital propagation operator ($h$) to the first image of interest in order to propagate it, by a plurality of reconstruction distances ($z_j$), along the propagation axis (Z), so as to obtain a first stack of reconstructed complex images, called the first stack of images, containing as many reconstructed complex images $(Az_j)$ as there are reconstruction distances, each reconstructed complex image $(Az_j)$ being representative of an exposure light wave (14) to which the image sensor (20) is exposed;
   cii) for at least one radial coordinate (x,y) defined in the first image of interest, determining a reconstruction distance $(z_{x,y})$ that maximizes the variation in a component ($comp(Az_j(x, y)),$-$Re(Az_j(x, y))$) of each complex image $(Az_j)$ forming the first stack of images, along an axis parallel to the propagation axis and passing through said radial coordinate, said reconstruction distance $(z_{x,y})$ thus determined forming a transverse coordinate associated with said radial coordinate, the value of the component calculated at said reconstruction distance being what is called a maximum value $A_{max}(x,y)$ associated with said radial coordinate (x,y), substep cii) being carried out for all or some radial coordinates associated with the pixels of the first image of interest;
   ciii) establishing a list of three-dimensional positions, each three-dimensional position comprising a radial coordinate (x,y) and the associated transverse coordinate $(z_{x,y})$ determined in substep cii), each three-dimensional position being associated with the maximum value $(A_{max}(x,y))$ obtained in substep cii);
   civ) selecting three-dimensional positions ($x, y, z_{x,y}$) depending on the maximum value $(A_{max}(x,y))$ that is associated therewith;

   the method being such that, in step cii), the considered component ($comp(Az_j(x, y))$) comprises the real part, or the imaginary part, or the modulus, or the phase of each complex image $(Az_j)$ forming the stack of images.

4. Method according to Claim 2 or Claim 3, wherein the first image of interest $(I_v(t_1))$ is:

   - the first image $(I(t_1))$ acquired in step b);
   - or the first image $(I(t_1))$ acquired in step b), from which is subtracted an image of the fluidic chamber, acquired by the image sensor, prior or subsequently to the acquisition of the first image, the subtraction being weighted by a weighting term;
   - or the first image $(I(t_1))$ acquired in step b), from which is subtracted an average of images acquired prior and subsequently to the acquisition of the first image, respectively.

5. Method according to either one of Claims 3 to 4, wherein substep civ) comprises:

   - forming an image $(A_{max})$, called the first maxima image, each pixel of which is associated with a three-dimensional position $(x,y,z_{xy})$ determined in substep ciii) and is assigned the maximum value $(A_{max}(x,y))$ determined, in substep ciii), for said three-dimensional position;
   - selecting, in the first maxima image, pixels $(x_{max},y_{max})$ the value $(A_{max}(x,y))$ of which is maximum in a neighbouring zone defined around each pixel;
   - calculating, for each selected pixel, a signal-to-noise ratio $(SNR(x_{max},y_{max}))$ depending on said maximum value $(A_{max}(x,y))$ and on the value of pixels of the first maxima image $(A_{max})$ located in a calculation zone lying around said pixel;

   such that each three-dimensional position is selected depending on the signal-to-noise ratio calculated for the pixel of the first maxima image that is associated therewith.

6. Method according to any one of the preceding claims, wherein step d) comprises acquiring, with the image sensor (20), a second image $(I(t_2))$, each pixel of which is associated with a radial coordinate (x,y) in the detection plane $(P_0)$.

7. Method according to Claim 6, wherein step d) comprises the following substeps:

   di) obtaining a second image of interest $(I_v(t_2))$ from the acquired second image $(I(t_2))$ and applying a digital propagation operator $(h)$ to the second image of interest in order to propagate it, by a plurality of reconstruction distances, along the propagation axis (Z), so as to obtain a second stack of reconstructed complex images $(Az_j)$, called the second stack of images, containing as many reconstructed complex images as there are reconstruction distances $(z_j)$, each reconstructed complex image being representative of an exposure light wave (14) to which the image sensor (20) is exposed at the second time;
   dii) for at least one radial coordinate (x,y) defined in the second image of interest, determining a reconstruction distance $(z_{xy})$ that maximizes the variation in a component of each complex image forming the second stack of images, along an axis parallel to the propagation axis and passing through said radial coordinate, said reconstruction distance forming a transverse coordinate associated with said radial coordinate, the value of the component calculated at said reconstruction distance being what is called a maximum value associated with said radial coordinate, substep dii) being carried out for all or some radial coordinates associated with the pixels of the second image of interest;
   diii) establishing a list of three-dimensional positions, each three-dimensional position comprising a radial coordinate (x,y) and the associated transverse coordinate determined in substep dii), each three-dimensional position being associated with the maximum value obtained in substep dii);
   div) selecting three-dimensional positions depending on the maximum value that is associated therewith;

   the method being such that, in step dii), the considered component comprises the real part, or the imaginary part, or the modulus, or the phase of each complex image $(Az_j)$ forming the stack of images.

8. Method according to Claim 7, wherein, in substep step di), the second image of interest $(I_v(t_2))$ is:

   - the acquired second image $(I(t_2))$,
   - or the acquired second image $(I(t_2))$, from which is subtracted an image of the fluidic chamber, acquired by the image sensor, prior or subsequently to the acquisition of the second image, the subtraction being weighted by a weighting term possibly comprised between 0 and 1;
   - or the acquired second image $(I(t_2))$, from which is subtracted an average of images acquired prior and subsequently to the acquisition of the second image, respectively.

9. Method according to Claim 7 or Claim 8, wherein substep div) comprises:

   - forming an image $(A_{max})$, called the second maxima image, each pixel of which is associated with a three-dimensional position $(x, y, z_{x,y})$ determined in substep diii) and is assigned the maximum value $(A_{max}(x,y))$ determined, in substep diii), for said three-dimensional position;
   - selecting, in the second maxima image, pixels $(x_{max}, y_{max})$ the value $(A_{max}(x, y))$ of which is maximum in a neighbouring zone defined around each pixel;
   - calculating, for each selected pixel, a signal-to-noise ratio $(SNR(x_{max}, y_{max}))$ depending on said maximum value $(A_{max}(x, y))$ and on the value of pixels of the second maxima image $(A_{max})$ located in a calculation zone lying around said pixel;

   such that each three-dimensional position is selected depending on the signal-to-noise ratio calculated for the pixel of the second maxima image that is associated therewith.

10. Method according to any one of Claims 1 to 5, wherein:

    - step b) comprises two successive illuminations of the fluidic chamber with the light source, at the first time and at the second time, such that the first image $(I)$ represents the exposure wave (14) at each of the times;
    - steps c) and d) are merged into one and the same step of obtaining the coordinates of particles at the first time and at the second time.

11. Method according to any one of the preceding claims, wherein step g) comprises determining a movement range using the movement model taken into account in step f), the potential movements being validated when they are comprised in said movement range.

12. Method according to any one of the preceding claims, wherein:

    - the fluid contains particles, each particle having a property and moving, with respect to the fluid, according to a movement model, called the particulate movement model;
    - the particulate movement model depends on said property of the particles,

    the method comprising, on the basis of movements validated in step g), a step i) of taking into account at least one particulate movement model, so as to count the particles depending on a value of said property.

13. Method according to Claim 12, wherein the property is a mass or an electric charge, or an aptitude to move in the fluid.

14. Method according to either one of Claims 12 and 13, comprising:

    - taking into account a particulate movement model for a preset value of the property;
    - calculating discrepancies in the movements of each particle with respect to said particulate movement model;

    such that the property of each particle is determined depending on said discrepancies and said preset value of the property.

15. Device for counting particles flowing through a fluidic chamber, the device including:

    - a light source (11) configured to illuminate the fluidic chamber (15);
    - an image sensor (20) lying in a detection plane $(P_0)$, the fluidic chamber being interposed between the image sensor and the light source, the image sensor being configured to acquire at least one image of the fluidic chamber illuminated by the light source,
    - the device comprising a processor (30) able to implement steps c) to h) of a method according to any one of Claims 1 to 14 on the basis of at least one image acquired by the image sensor.

**Fig. 1A**

**Fig. 1B**

**Fig. 2A**

**Fig. 2B**

**Fig. 2C**

**Fig. 2D**

**Fig. 2E**

**Fig. 2F**

**Fig. 2G**

**Fig. 2H**

Fig. 3A

Fig. 3B

Fig. 3C

**Fig. 4A**

**Fig. 4B**

**Fig. 5**

**EP 3 343 201 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008090330 A
- FR 3031180
- US 2012148141 A
- EP 3031180 A